# EUROPEAN PATENT APPLICATION

(11) **EP 1 491 499 A1**
(43) Date of publication of application: **29.12.2004**
(21) Application number: 03712900.4
(22) Date of filing: 25.03.2003
(51) Int. Cl.: C01B 33/149, B41M 5/00

(54) **COMPOSITE SOL, PROCESS FOR PRODUCING THE SAME, AND INK-JET RECORDING MEDIUM**

(30) Priority: 26.03.2002 JP 2002085027; 24.02.2003 JP 2003045455
(71) Applicant: Nissan Chemical Industries, Ltd., Chiyoda-ku, Tokyo 101-0054 (JP)
(72) Inventor: OIWAMOTO, Masaki, c/o Nissan Chemical Ind., Ltd, Sodegaura-shi, Chiba 299-026 (JP); KATO, Hirokazu, c/o Nissan Chemical Ind., Ltd, Sodegaura-shi, Chiba 299-026 (JP)
(74) Representative: HOFFMANN EITLE
(86) International application number: PCT/JP2003/003589
(87) International publication number: WO 2003/080509

(57) **Abstract**

A composite sol containing colloidal composite particles having a particle diameter measured by dynamic light scattering method of 20 to 500 nm, composed of colloidal silica particles having a specific surface area diameter of 3 to 100 nm and aluminum phosphate bonding the colloidal silica particles or coating and bonding the colloidal silica particles; a process for producing the composite sol; a coating composition for ink receiving layer containing the composite sol; and an ink jet recording medium having an ink receiving layer containing the composite sol.

## Description

### Technical Field

In a first embodiment, the present invention relates to a composite sol in which are stably dispersed in a medium colloidal composite particles comprising colloidal silica particles and aluminum phosphate with which the colloidal silica particles are bonded or with which the colloidal silica particles are coated and bonded, and a process for producing the composite sol.

And in a second embodiment, the present invention relates to an ink jet recording medium on which recording is performed with a water-based ink, more particularly to a coating composition for an ink receiving layer containing the above-mentioned composite sol and having high ink absorptivity and an ink jet recording medium having the ink receiving layer.

Furthermore, the above-mentioned composite sol is characterized by having properties of silica and aluminum phosphate from the standpoint of substance, and having a shape of aggregated particles composed of colloidal silica particles and aluminum phosphate bonding them from the standpoint of shape. The sol exhibits excellent film-forming properties and porosity when dried on the surface of a solid article, and is used in several fields as microfiller for various coating agents, a modifier, a binding agent, a corrosion inhibitor, a carrier for catalyst, a fire retardant and the like.

### Background Art

A silica sol has various uses. For most of the uses, spherical or approximately spherical colloidal silica particles are used in a state near to monodispersion in a liquid, that is, silica sol having a small aggregated particle diameter (secondary particle diameter) in a liquid has been used. In addition, it is required to modify the properties of the surface of colloidal silica particles for a specific purpose, and several modifications are performed.

Heretofore, in order to efficiently produce a silica sol comprising spherical or approximately spherical colloidal silica particles, many methods for improving process for producing them and for modifying the properties of the surface of colloidal silica particles have been proposed. However, there are few proposal for controlling the shape of the colloidal silica particles dispersed in a silica sol or simultaneously performing the modification of the properties of the surface thereof and the shape of colloidal silica particles.

WO 00/15552 discloses a stable silica sol having a silica concentration of 5 to 40% by weight, and containing liquid-medium dispersed moniliform colloidal silica particles composed of spherical colloidal silica particles having a particle diameter measured by a nitrogen absorption method (D₂ nm) of 10 to 80 nm and metal oxide-containing silica bonding the spherical colloidal silica particles, in which the spherical colloidal silica particles link in rows in only one plane; and a method for producing the stable silica sol. In the meantime, the moniliform colloidal silica particles are characterized by having 3 or more as a ratio of D₁/D₂ wherein D₁ (unit: nm) is a particle diameter of the moniliform colloidal silica particles measured by a dynamic light scattering method and D₂ (unit: nm) is a particle diameter of the spherical colloidal silica particles measured by a nitrogen absorption method, and having D₁ of 50 to 500 nm.

US Patent No. 3,650,783 discloses a sol in which composite particles of silica and aluminum phosphate are homogeneously dispersed, the particles have a weight ratio of silica to aluminum phosphate ranging from 90:10 to 10:90, a particle diameter of 3 to 250 nm and are composed of silica uniformly coated with aluminum phosphate, and the sol is prepared by adding a mixture liquid of an aqueous solution of aluminum sulfate with phosphoric acid and further an aqueous solution of ammonium hydroxide to a silica sol. However, the US patent does not disclose the shape of the composite particles. In addition, it does not reveal the physical properties or stability of the sol.

The ink jet recording process is a process in which ink droplets ejected from nozzles at a high speed are applied onto a recording material to record images, characters and the like. This process is used in various fields such as several printers, facsimile devices, computer terminals as it enables relatively fast processing with less noisy and easy full-colorization.

In this process, the ink used contains a large amount of solvent so that a large amount of ink must be used in order to obtain a high recording density. In addition, since ink droplets are continuously ejected, there tends to occur a drawback that first ink droplets have not been completely absorbed when next droplets are ejected and the both ink droplets fuse thereby causing conjugation of ink dots. Therefore, the recording paper or sheet used in this ink jet recording process is required to give printing dots that are high in density, light in hue and sharp, to absorb ink at a high rate to cause no blurring and to give brilliance after printing.

Paper can absorb ink by itself and therefore it is possible to make recording on it as it is by ink jet process. However, to obtain high recording density, it is necessary to provide an ink receiving layer by coating on it. Moreover, to make recording on a sheet that does not absorb ink, such as synthetic paper or PET film used in OHP or the like by an ink jet process, it is indispensable to provide an ink receiving layer by coating on it.

Hitherto, silica powder, silica sol, alumina sol or the like has been used therefor. It has been attempted to improve ink absorptivity, absorption speed, coloring properties, high density printing, brilliance and the like by provision of an ink receiving layer on paper or a sheet by coating thereon a coating agent obtained by adding an aqueous resin binder to the above-mentioned material and drying.

JP-A-4-201286 discloses an ink receiving layer composition, composed mainly of a water-dispersible polymer, colloidal silica particles linked in a moniliform and/or branched chain form, and other particles. JP-A-6-092011 (the corresponding patent: US Patent No. 5,372,884) discloses an ink receiving layer composed of a cation-modified non-spherical colloidal silica particles and polyvinyl alcohol. JP-A-7-276789 (the corresponding patent: US Patent No. 5,612,281) proposes an ink receiving layer of a three-dimensional network structure having a porosity of 50 to 80% formed from colloidal silica particles having a mean primary particle diameter of 10 nm or less and a water-soluble resin.

WO 00/15552 proposes an ink receiving layer comprising an aqueous resin and a silica sol containing liquid-medium dispersed moniliform colloidal silica particles composed of spherical colloidal silica particles having a particle diameter measured by a nitrogen absorption method (D₂ nm) of 10 to 80 nm and metal oxide-containing silica bonding the spherical colloidal silica particles, in which the spherical colloidal silica particles link in rows in only one plane. In the meantime, the moniliform colloidal silica particles are characterized by having 3 or more as a ratio of D₁/D₂ wherein D₁ (unit: nm) is a particle diameter of the moniliform colloidal silica particles measured by a dynamic light scattering method and D₂ (unit: nm) is a particle diameter of the spherical colloidal silica particles measured by a nitrogen absorption method, and by having D₁ of 50 to 500 nm.

The above-mentioned methods generally form vacant spaces in the coating of a receiving layer and make ink absorb in the vacant space. At the same time, as an aqueous resin used for forming the receiving layer, those of the type in which ink is absorbed and held by swelling action are used widely. That is, an ink receiving layer composition is formed by appropriately mixing the filler having large vacant space and the aqueous resin that absorbs ink.

In the above example, the moniliform silica sol can give a receiving layer having larger vacant space compared to the former colloidal silica sol and therefore afford a good ink absorptivity, high density printing and the like. However, these sols have drawbacks that the silica concentration can not be increased when the aggregated particle diameter becomes large, thereby resulting in a lowering of stability in neutral region. In addition, in order to make the aggregated particle diameter larger and to increase the silica concentration, it is required to make the primary particle diameter larger. This results in drawbacks, such as a lowering of transparency or printing concentration. Further, it is difficult to control the aggregated particle diameter in the production process of the moniliform silica sol.

### Disclosure of Invention

A first embodiment of the present invention is to provide a composite sol showing improved properties in film-forming property, porosity, corrosion resistance, binding property, adherence and the like by modifying the shape of colloidal silica particles through a formation of composite between colloidal silica particles and aluminum phosphate and a coating of the surface of the colloidal silica particles with the aluminum phosphate, and further a method of efficiently producing the composite sol.

A second embodiment of the present invention has been achieved in view of the above-described prior art. The object thereof is to provide a coating composition for an ink receiving layer for use in ink jet recording medium (that is, ink jet recording paper and sheet) that has high ink absorptivity and enables high quality image formation in ink jet type printing with water-based or oil-based ink and dye-based ink or pigment-based ink, and an ink jet recording medium having the ink receiving layer.

The composite sol of the first embodiment according to the present invention contains colloidal composite particles having a particle diameter measured by dynamic light scattering method of 20 to 500 nm, composed of colloidal silica particles having a specific surface area diameter of 3 to 100 nm and aluminum phosphate bonding the colloidal silica particles or coating and bonding the colloidal silica particles.

And it is preferable for the composite sol to have a weight ratio of silica to aluminum phosphate ranging from 99:1 to 10:90, and a total concentration of silica and aluminum phosphate ranging from 1 to 60% by weight.

A process for producing the composite sol containing colloidal composite particles having a particle diameter measured by dynamic light scattering method of 20 to 500 nm, composed of colloidal silica particles having a specific surface area diameter of 3 to 100 nm and aluminum phosphate bonding the colloidal silica particles or coating and bonding the colloidal silica particles, and having a weight ratio of silica to aluminum phosphate ranging from 99:1 to 10:90, and a total concentration of silica and aluminum phosphate ranging from 1 to 60% by weight, comprises the following steps (a), (b) and (c) (the composite sol is efficiently produced by the process):
step (a) of adding phosphoric acid or a phosphate to an aqueous silica sol having a silica (SiO₂) concentration of 0.5 to 50% by weight, pH of 1 to 11 and a specific surface area diameter of 3 to 100 nm, and mixing them;
step (b) of adding an aqueous solution of aluminum salt to the mixture liquid (a) obtained by step (a), and mixing them; and
step (c) of maturing the mixture liquid (b) obtained by step (b) at 20 to 100°C for 0.5 to 20 hours.

And in a preferable embodiment of the process for producing the composite sol, the aqueous solution of aluminum salt used in step (b) is an aqueous solution of sodium aluminate and/or an aqueous solution of basic aluminum salt.

The shape of colloidal composite particles constituting the composite sol of the first embodiment according to the present invention can be observed in a photograph taken with an electronic microscope. A number of colloidal composite particles present in the sol is not limited to be present in the same shape, and is present in a moniliform shape (in this case, including an almost straight shape, an angled shape, a branched shape and a ring shape), or a three-dimensionally aggregated shape.

When attention is paid to one colloidal particle, the particle basically comprises colloidal silica particles and aluminum phosphate bonding them. In addition, in case where the ratio of aluminum phosphate to silica is high, it is understood that the surface of the colloidal silica particles is also coated with aluminum phosphate and bonded by aluminum phosphate.

In the composite sol produced in a given process and a given condition, the degree of link of the colloidal composite particles and the degree of coating of the colloidal silica particles with aluminum phosphate are controlled within a certain range.

The colloidal composite particles obtained by the first embodiment according to the present invention are basically particles in which colloidal silica particles having a specific surface area diameter of 3 to 100 nm are bonded and linked with aluminum phosphate. When a large amount of aluminum phosphate is added, colloidal silica particles are built up by aluminum phosphate, and an amount of aluminum phosphate in the linking part merely becomes much, aluminum phosphate is not present as separate particles.

The aggregated particle diameter (secondary particle diameter) of the colloidal composite sol of the first embodiment according to the present invention is inappropriate to be represented by the length which could be presumed from a photograph taken with an electronic microscope but it is appropriate to be represented by the value measured by dynamic light scattering method. The method for measuring particle diameters by the dynamic light scattering method is explained in Journal of Chemical Physics, Vol. 57, Number 11 (December of 1972) p. 4814. For example, the particle diameter may easily be measured by the use of a commercially available apparatus called model N4 produced by Coulter Electronics, Inc. The particle diameter as the size of the colloidal composite particles constituting the composite sol of the first embodiment according to the present invention is 20 to 500 nm as expressed in terms of a measured value by the dynamic light scattering method.

As the silica and aluminum phosphate constituting the composite sol of the first embodiment according to the present invention are amorphous, the colloidal composite particles are also amorphous.

The composite sol of the first embodiment according to the present invention generally contains the silica and aluminum phosphate in a total concentration of 60% by weight or less, preferably 5 to 50% by weight.

In the composite sol of the first embodiment according to the present invention, the colloidal composite particles are fundamentally particles in which the colloidal silica particles are bonded or coated and bonded by aluminum phosphate. Thus, the higher the degree of the linking is, the higher the viscosity of the sol is. When a total concentration of the silica and aluminum phosphate is 60% by weight or less, the resulting sol has a viscosity of about several mPa·s to about 1,000 mPa·s at 20°C. The sol is highly stable even at a high viscosity and causes no precipitation of a large amount of colloidal composite particles nor gelling during storage.

Zeta potential of the colloidal composite particles of the first embodiment according to the present invention is negative at the whole pH region similarly to commercially available and general silica particles (containing a slight amount of aluminum). As colloidal particles composed of only aluminum phosphate have an isoelectric point at pH 5, zeta potential thereof is positive at pH 5 or less and negative at pH 5 or more. On the contrary, zeta potential of the colloidal composite particles of the present invention is negative at the whole pH region as mentioned above, as they are influenced by the potential of the colloidal silica particles being core of the composite particles.

Further, the composite sol of the first embodiment according to the present invention may have any one of water, organic solvents, and mixed solvents of a water-soluble organic solvent and water, as its medium. The organic solvents include methanol, ethanol, isopropanol, ethylene glycol, dimethylacetamide and the like.

The composite sol of the first embodiment according to the present invention, which contains colloidal composite particles having a particle diameter measured by dynamic light scattering method of 20 to 500 nm, composed of colloidal silica particles having a specific surface area diameter of 3 to 100 nm and aluminum phosphate bonding the colloidal silica particles or coating and bonding the colloidal silica particles, and which has a weight ratio of silica to aluminum phosphate (a weight ratio of silica : aluminum phosphate) ranging from 99:1 to 10:90 and a total concentration of silica and aluminum phosphate ranging from 1 to 60% by weight, can be obtained as a sol having a pH of 3 to 10 through steps (a), (b) and (c) as described above.

The aqueous silica sol used in step (a) is produced by an arbitrary method that is conventionally well-known. And, the sol may be an aqueous silica sol having a pH of 1 to 11 that is commercially available as industrial material. In case where the commercially available aqueous silica sol is in an alkaline condition, an acid silica sol having a pH of 1 to 4 can be easily obtained by subjecting the alkaline sol to a cation exchange treatment. In a case where a commercially available acid aqueous silica sol has a pH of 2 to 4, an aqueous silica sol having a pH of 4 to 11 can be obtained by adding an alkaline substance to the acid aqueous silica sol. In addition, pH of the sol can be lowered by adding acid such as an inorganic acid, an organic acid or the like to an alkaline silica sol.

Specific surface area diameter is commercially employed as mean diameter of silica sol. The specific surface area diameter means a primary particle diameter of colloidal silica particles dispersed in a sol.

As the specific surface area diameter (mean diameter), a particle diameter measured by a nitrogen absorption method is generally employed, in which the particle diameter is determined by converting a specific surface area measured by a nitrogen absorption method to a diameter of spherical particle. The specific surface area diameter (D nm) is calculated according to equation: D = 6000/(S x d) wherein S is a specific surface area (m²/g) and d is a true specific gravity (g/cm²).

However, it is difficult to measure the particle diameter of silica sols having a specific surface area diameter of 3 to 8 nm by a nitrogen absorption method. Thus, a particle diameter measured by Sears titration method is generally employed, in which the particle diameter is determined by converting a specific surface area measured by Sears titration method to a diameter of spherical particle. The measurement of particle diameter measured by a Sears titration method is described in Analytical Chemistry, vol. 28, (1981) p. 1981.

In the silica sol having a specific surface area diameter of 3 to 100 nm (that is, a colloid system in which colloidal silica particles having a specific surface area diameter of 3 to 100 nm are dispersed in a medium), the colloidal silica particles may be spherical or non-spherical, and have a low or high ratio of a particle diameter measured by dynamic light scattering method to a specific surface area diameter (that is, a ratio of a particle diameter measured by dynamic light scattering method to a particle diameter measured by Sears titration method or a particle diameter measured by a nitrogen absorption method) [a ratio of a particle diameter measured by dynamic light scattering method/a specific surface area diameter (that is, a particle diameter measured by Sears titration method or a particle diameter measured by a nitrogen absorption method)]. The ratio is generally less than 3 in sols that are commercially available as industrial material.

In step (a), the aqueous silica sol having a specific surface area diameter of 3 to 100 nm includes sols having a silica (SiO₂) concentration of 0.5 to 50% by weight. The silica concentration is indicated as a concentration of SiO₂ in the present invention.

In step (a), phosphoric acid or a phosphate is added and mixed in an amount necessary to obtain a composite sol having a weight ratio of silica to aluminum phosphate ranging from 99:1 to 10:90 in step (c).

In step (a), the phosphoric acid includes an aqueous solution of orthophosphoric acid (H₃PO₄) and the phosphate includes alkali phosphate such as sodium dihydrogen phosphate (NaH₂PO₄), disodium hydrogen phosphate (Na₂HPO₄) or sodium phosphate (Na₃PO₄), phosphoric amine such as ammonium dihydrogen phosphate (NH₄H₂PO₄), diammonium hydrogen phosphate ((NH₄)₂HPO₄) or ammonium phosphate ((NH₄)₃PO₄), in a solid or an aqueous solution. In the present invention, orthophosphoric acid is the most preferable.

In step (a), it is preferable to perform an addition of phosphoric acid or phosphate to silica sol with stirring. In addition, the temperature and time in a mixing in the step are not specifically limited, and the mixing may be performed at 20°C for about 1 minute to about 1 hour.

In step (b), an aqueous solution of aluminum salt is added to the mixture liquid (a) obtained in step (a). According to a pH of the mixture liquid (a) obtained in step (a), the addition is preferably performed as soon as possible after the addition of phosphoric acid or phosphate in step (a) and with vigorously stirring. In addition, the temperature and time in the addition and mixing in the step are not specifically limited, and they may be performed at 20°C for about 2 minute to about 1 hour. For the stirring, Satake type agitator, Disper type agitator, homogenizer or the like can be used.

The aluminum salt added in step (b) includes an aqueous solution of alkaline aluminate such as sodium aluminate or potassium aluminate, an aqueous solution of basic aluminum salt such as quaternary ammonium aluminate, basic aluminum chloride, basic aluminum acetate, basic aluminum nitrate or basic aluminum lactate, an aqueous solution of inorganic or organic aluminum salt such as aluminum sulfate, aluminum nitrate, aluminum chloride, aluminum sulfamate, aluminum formate, aluminum oxalate or aluminum lactate, and the like. One or more selected from the group of the above-mentioned aqueous solutions may be used.

In step (b), the amount of aluminum salt added is an amount corresponding to the amount of phosphoric acid added in step (a). In step (b), aluminum phosphate is fundamentally produced by reacting phosphate ion added in step (a) with aluminate ion or aluminum ion added in step (b). In the present invention, the composition of aluminum phosphate is fundamentally one of neutral aluminum phosphate, but is not limited thereto, includes also those of basic aluminum phosphates [(Al/PO₄) molar ratio > 1]. And, aluminum phosphates in any composition are present in a form of hydrate, and are indicated to be amorphous with X-ray diffraction.

The mixture liquid (b) obtained in step (b) has preferably a pH of 3 to 9. If necessary, it is able to control pH by adding acid such as sulfuric acid, hydrochloric acid, nitric acid, formic acid or oxalic acid or an aqueous solution of alkaline substance such as alkaline metal hydroxide, ammonia, quaternary ammonium hydroxide or amine.

The aluminum phosphate produced in step (b) is strongly attached to the surface of colloidal silica particles, bonds colloidal silica particles each other, and coats the full surface of the colloidal silica particles and further bonds the particles each other to give colloidal composite particles having a particle diameter measured by dynamic light scattering method of 20 to 500 nm.

In step (c), the mixture liquid (b) obtained by step (b) is matured at 20 to 100°C for 0.5 to 20 hours. The maturing is preferably performed under stirring of the mixture liquid. The maturing can lead to the completion of formation of aluminum phosphate which is produced essentially in step (b). The maturing may be performed under any condition which water is evaporated or is not evaporated.

The composite sol obtained in step (c) has a total concentration of silica and aluminum phosphate ranging from 1 to 40% by weight. If the total concentration is low, it is necessary to concentrate the composite sol. In this case, it is preferable to remove, from the composite sol obtained in step (c), the cations and anions in such an amount that would interference with the stabilization of the sol if they are present in the concentrated sol or in any excess amount more than that amount. For removing the cations and anions, there are methods in which a fine porous film such as ultrafiltration membrane or reverse osmosis membrane are used and a method which uses an ion exchange resin. For the concentration, evaporation method or ultrafiltration membrane method or the like can be employed.

The composite sol obtained in step (c) or the composite sol from which an appropriate amount of cations, anions and water are removed has a total concentration of silica and aluminum phosphate ranging from 10 to 60% by weight, a viscosity of about several mPa·s to about 1,000 mPa·s at 20°C, and a pH of 3 to 10, preferably 4 to 9. The composite sol is highly stable even in a relatively high salt concentration in the sol or at a pH of a neutral region. The particle diameter measured by dynamic light scattering method of the colloidal composite particles in the composite sol is easily measured with a commercially available apparatus, and ranges from 20 to 500 nm.

As the particle diameter measured by nitrogen absorption method of the aluminum phosphate formed in a method (Comparative Example 2) similar to that of the present invention ranges from 5 to 50 nm, the particle diameter measured by nitrogen absorption method of the colloidal composite particles is larger or smaller than that of colloidal silica particles depending on the particle diameter of colloidal silica particles and the weight ratio of silica to aluminum phosphate, and the particle diameter measured by nitrogen absorption method of the colloidal composite particles obtained according to the present invention ranges from 5 to 100 nm.

Another composite sol in which colloidal silica particles are fully coated and bonded with aluminum phosphate by further repeating steps (a), (b) and (c) by use of the composite sol obtained through steps (a), (b) and (c) of the first embodiment according to the present invention.

The composite sol obtained by the method of the first embodiment according to the present invention is finally irreversibly altered to a gel of colloidal composite particles by removing water. In case where the composite sol is alkaline, it is possible to make the sol acid by subjecting it to a cation exchange process, and it is possible to obtain another alkaline composite sol by adding another alkali to it.

Although the composite sol obtained by the method according to the present invention is negatively charged, it is possible to obtain a positively charged sol from the negatively charged sol by a general method. Further, it is also possible to obtain an organo sol from the aqueous composite sols by substituting water being medium thereof with an organic solvent by an ordinary method such as distillation substitution method.

In the second embodiment of the present invention, it has been found that use of a coating composition for ink receiving layer comprising:
- a composite sol containing colloidal composite particles having a particle diameter measured by dynamic light scattering method of 50 to 500 nm, composed of colloidal silica particles having a specific surface area diameter of 5 to 100 nm and aluminum phosphate, among the above-mentioned composite sols, and
- an aqueous resin,
results in an increased ink absorptivity, a fast absorption speed, an improved color development of ink and an improved brilliance.

In addition, the coating composition for ink receiving layer comprising the composite sol and the aqueous resin are preferably used in the following embodiments.

The composite sols are composite sols containing colloidal composite particles having a particle diameter measured by dynamic light scattering method of 50 to 300 nm, composed of colloidal silica particles having a specific surface area diameter of 5 to 50 nm and aluminum phosphate bonding the colloidal silica particles or coating and bonding the colloidal silica particles, and having a weight ratio of silica to aluminum phosphate ranging from 99:1 to 10:90. In this case, when the ink receiving layer formed from such a composition is used for a surface layer of an ink jet recording medium, it confers not only a good ink absorptivity and an excellent color development but also abrasion resistance as it has a high surface hardness. Consequently, this ink receiving layer is preferable.

Further, the composite sols are composite sols containing colloidal composite particles having a particle diameter measured by dynamic light scattering method of 100 to 500 nm, composed of colloidal silica particles having a specific surface area diameter of 50 to 100 nm and aluminum phosphate bonding the colloidal silica particles or coating and bonding the colloidal silica particles, and having a weight ratio of silica to aluminum phosphate ranging from 99:1 to 10:90. In this case, when the ink receiving layer formed from such a composition is used for an internal layer of an ink jet recording medium, it results in a high ink retention rate and therefore confers a preferable effect for color development.

The second embodiment of the present invention relates to a coating composition for ink receiving layer in ink jet recording, comprising:
- a composite sol containing colloidal composite particles having a particle diameter measured by dynamic light scattering method of 50 to 500 nm, composed of colloidal silica particles having a specific surface area diameter of 5 to 100 nm and aluminum phosphate bonding the colloidal silica particles or coating and bonding the colloidal silica particles, and having a weight ratio of silica to aluminum phosphate ranging from 99:1 to 10:90; and
- an aqueous resin.

Further, the second embodiment relates to an ink jet recording medium having an ink receiving layer comprising:
- a composite sol composed of colloidal silica particles having a specific surface area diameter of 5 to 100 nm and aluminum phosphate bonding the colloidal silica particles or coating and bonding the colloidal silica particles, containing colloidal composite particles having a particle diameter measured by dynamic light scattering method of 50 to 500 nm, and having a weight ratio of silica to aluminum phosphate ranging from 99:1 to 10:90; and
- an aqueous resin.

In addition, the ink jet recording medium having an ink receiving layer comprising the composite sol and the aqueous resin is preferably used in the following embodiments.

The composite sols are composite sols containing colloidal composite particles having a particle diameter measured by dynamic light scattering method of 50 to 300 nm, composed of colloidal silica particles having a specific surface area diameter of 5 to 50 nm and aluminum phosphate, and having a weight ratio of silica to aluminum phosphate ranging from 99:1 to 10:90. In this case, when the ink receiving layer formed from such a composition is used for a surface layer of an ink jet recording medium, it confers not only a good ink absorptivity and an excellent color development but also abrasion resistance as it has a high surface hardness. Consequently, this ink receiving layer is preferable.

Further, the composite sols are composite sols containing colloidal composite particles having a particle diameter measured by dynamic light scattering method of 100 to 500 nm, composed of colloidal silica particles having a specific surface area diameter of 50 to 100 nm and aluminum phosphate, and having a weight ratio of silica to aluminum phosphate ranging from 99:1 to 10:90. In this case, when the ink receiving layer formed from such a composition is used for an internal layer of an ink jet recording medium, it results in a high ink retention rate and therefore confers a preferable effect for color development.

### Brief Description of Drawings

Fig. 1 is a photograph of the composite colloidal silica particles in the composite sol obtained in Example 7, taken with an electron microscope; and
Fig. 2 is a photograph of the colloidal particles of aluminum phosphate obtained in Comparative Example 2, taken with an electron microscope.

### Best Mode for carrying out the Invention

Hereinafter, the process for producing the composite sol of the first embodiment according to the present invention will be described in detail.

Although the aqueous silica sol used in step (a) may have a specific surface area diameter less than 3 nm, it is not preferable because the colloidal composite particles obtained in step (b) are liable to become gel in this case. In addition, although the particle diameter is more than 100 nm, it is not preferable because the colloidal composite particles are liable to precipitate in case where the particle diameter thereof becomes too large. Therefore, the specific surface area diameter is preferably 3 to 100 nm.

In step (a), although the silica concentration of the aqueous silica sol having a specific surface area diameter of 3 to 100 nm may be less than 0.5% by weight, it is not efficient because a long time is required for concentrating the composite sol obtained in step (c) in this case. In addition, although the concentration may be more than 50% by weight, it is not preferable because the particle diameter of the colloidal composite particles becomes too large in this case. Therefore, the silica concentration is preferably 0.5 to 50% by weight.

In step (a), the pH of the aqueous silica sol having a specific surface area diameter of 3 to 100 nm is preferable 1 to 11. Although the pH may be less than 1, it is not preferable because unnecessary anions are increased. In addition, although the pH may be more than 11, it is not preferable because unnecessary cations are increased.

As the aqueous silica sol having a specific surface area diameter of 3 to 100 nm, commercially available industrial products may be used as such or in a state diluted with pure water. In this case, it is preferable to use the sols containing less amount of salts (that is, cations or anions) therein.

In step (a), the pH of mixture liquid (a) is not specifically limited, but the liquid having a pH of 7 or less is preferable as it is more stable and the colloidal composite particle is satisfactorily produced owing to the formation of aluminum phosphate in step (b).

The aluminum salt used in step (b) is reacted with phosphoric acid added in step (a) to produce aluminum phosphate. As the aluminum salt acts as gelling agent for a silica sol, it is preferable to add it in a state of aqueous solution with vigorously stirring. And, the aqueous solution has preferably Al₂O₃ concentration of 10% by weight or less, and particularly 5% by weight or less.

The mixture liquid (b) obtained step (b) has preferably a pH of 3 to 10. Although the pH may be less than 3, it is not preferable because the resulting aluminum phosphate is liable to be easily dissolved. Although the pH may be more than 10, it is not preferable because the resulting aluminum phosphate is liable to be easily dissolved also in this case.

In step (b), the amount of aluminum salt added is an amount corresponding to the amount of phosphate ion added in step (a). When the amount of aluminum salt added in step (b) is less than amount of the phosphoric acid added in step (a), that is, (Al/PO₄) molar ratio is less than 1, neutral aluminum phosphate composition, phosphate ions and phosphates are produced, on the other hand, when the amount of aluminum salt is more than the amount of phosphoric acid, that is, (Al/PO₄) molar ratio is more than 1, basic aluminum phosphate composition is produced.

The weight ratio of silica to aluminum phosphate in the mixture liquid (b) obtained in step (b) is 99:1 to 10:90. When the ratio becomes more than 99:1, that is, the amount of aluminum phosphate to that of silica is less than this ratio, it is not preferable because the binding of the colloidal silica particles by aluminum phosphate becomes insufficient, and it is impossible to increase fully the particle diameter measured by dynamic light scattering method. In addition, when the ratio becomes less than 10:90, that is, the amount of aluminum phosphate to that of silica is more than this ratio, it is not preferable because the coating and binding of the colloidal silica particles by aluminum phosphate occurs too much compared to a necessary level, the resulting colloidal composite particles have a particle diameter more than 500 nm, the particles precipitate and a stable sol cannot be obtained.

The total concentration of silica and aluminum phosphate in the mixture liquid (b) obtained in step (b) is 1 to 40% by weight. As an aqueous solution of aluminum salt having a relatively low concentration is added in particularly step (b), silica concentration of silica sol used in step (a) generally becomes considerably low.

From the standpoint of the control of the particle diameter of the resulting colloidal composite particles and the production efficiency, the total concentration of silica and aluminum phosphate in liquid (b) is preferably 5 to 40% by weight.

Although a very little amount of precipitates (colloidal composite particles having a particle diameter measured by dynamic light scattering method of 500 nm or more) may be incidentally produced in the mixture liquid (b) obtained in step (b), they can be easily removed by standing or filtration (centrifugal filtration, cartridge filtration, or the like).

The reaction of phosphate ion with aluminate ion or aluminum ion is fundamentally complete in step (b). However, alkali metal ion or anion such as phosphate ion is liable to be contained in the resulting aluminum phosphate, and thereby the resulting aluminum phosphate is insufficient in stability. Therefore, the reaction can be complete by maturing in step (c) of which ion adsorbed and bonded are excluded out of the particles and the colloidal composite particles are stabilized.

The maturing may be performed at 20 to 100°C, and preferably at 30 to 100°C. In addition, the maturing at a temperature near to a boiling point is preferably performed under reflux.

The time of maturing is included in the time of stirring in step (b). The maturing for less than 0.5 hour results in an insufficient reaction. On the other hand, although the maturing may be performed for over 20 hours, it is not efficient because the reaction has reached to an equilibrium.

The composite sol obtained in step (c) has a total concentration of silica and aluminum phosphate ranging from 5 to 40% by weight fundamentally similar to that in step (b). The sol may be concentrated by a method in which a fine porous film such as ultrafiltration membrane or the like is used, or an evaporation method under normal pressure or a reduced pressure so as to obtain a total concentration of silica and aluminum phosphate ranging from 10 to 60% by weight. The composite sol or sol further concentrated in step (c) may be optionally diluted with water.

Although a very little amount of precipitates (colloidal composite particles having a particle diameter measured by dynamic light scattering method of 500 nm or more) may be incidentally produced in the composite sol obtained in step (c), they can be easily removed by standing or filtration (centrifugal filtration, cartridge filtration, or the like). In addition, they can be dispersed in a desired size with a dispersing apparatus such as homomixer, high-speed rotation homogenizer, high-pressure homogenizer, ultrasonic homogenizer, colloid mill, beads mill or the like, and then removed. Further, occasionally the dispersing process with the dispersing apparatus may be performed during the forming of the colloidal composite particles in step (b) or immediately after step (b).

Although alkali metal ions or anions are adsorbed on the surface of the colloidal composite particles obtained in step (c), these ions can be removed by subjecting the particles to cation or anion exchange process. And, an alkaline sol may be converted into an acid sol.

As the composite sol obtained according to the present invention is negatively charged, the sol can be mixed with a normal silica sol in any mixing ratio. In addition, it is possible to mix a positively charged sol from the negatively charged sol by a general method with a positively charged silica sol or alumina sol.

Next, the second embodiment of the present invention will be described hereinafter.

The composite sol which is used in the second embodiment of the present invention, which is composed of colloidal silica particles having a specific surface area diameter of 5 to 100 nm and aluminum phosphate bonding the colloidal silica particles or coating and bonding the colloidal silica particles, which contains colloidal composite particles having a particle diameter measured by dynamic light scattering method of 50 to 500 nm, and which has a weight ratio of silica to aluminum phosphate ranging from 99:1 to 10:90, can be produced according to the following process comprising steps (a), (b) and (c):
step (a) of adding phosphoric acid or a phosphate to an aqueous silica sol having a silica (SiO₂) concentration of 0.5 to 50% by weight, pH of 1 to 11 and a specific surface area diameter of 5 to 100 nm, and mixing them;
step (b) of adding an aqueous solution of aluminum salt to the mixture liquid (a) obtained by step (a), and mixing them; and
step (c) of maturing the mixture liquid (b) obtained by step (b) at 20 to 100°C for 0.5 to 20 hours.

In addition, in case where the composite sol is a composite sol composed of colloidal silica particles having a specific surface area diameter of 5 to 50 nm and aluminum phosphate bonding the colloidal silica particles or coating and bonding the colloidal silica particles, in which contains colloidal composite particles having a particle diameter measured by dynamic light scattering method of 50 to 300 nm, and which has a weight ratio of silica to aluminum phosphate ranging from 99:1 to 10:90, can be produced by using silica sol having a silica (SiO₂) concentration of 0.5 to 50% by weight, a pH of 1 to 11 and a specific surface area diameter of 5 to 50 nm in step (a).

And, in case where the composite sol is a composite sol composed of colloidal silica particles having a specific surface area diameter of 50 to 10 nm and aluminum phosphate bonding the colloidal silica particles or coating and bonding the colloidal silica particles, in which contains colloidal composite particles having a particle diameter measured by dynamic light scattering method of 100 to 500 nm, and which has a weight ratio of silica to aluminum phosphate ranging from 99:1 to 10:90, can be produced by using silica sol having a silica (SiO₂) concentration of 0.5 to 50% by weight, a pH of 1 to 11 and a specific surface area diameter of 50 to 100 nm in step (a).

As the composite sol in the second embodiment of the present invention, a composite sol having the total concentration of silica and aluminum phosphate ranging from 5 to 60% by weight and a pH of 3 to 10 can be used.

As to colloidal silica particles in the sol, those having a specific surface area diameter of 5 nm or less may be used, it is not preferable because in this case the viscosity is liable to become high when the total concentration of silica and aluminum phosphate is set to a high level. On the other hand, although those having a specific surface area diameter more than 100 nm may be used, it is not preferable because the transparency of the resulting sol is lowered in this case.

Although the sol having a particle diameter measured by dynamic light scattering method less than 50 nm may be used, it is not preferable because sufficient vacant space can not be obtained. On the other hand, although the sol having the particle diameter over 500 nm may be used, it is not preferable because the viscosity of the sol becomes too high and the transparency is lowered.

In the second embodiment of the present invention, it is possible to use positively charged composite sols obtained by treating alkaline, neutral or acid composite sols with surface treatments such as basic aluminum salts, basic zirconium salts, cationic surfactants or cationic polymers. The cationic surfactants include amine salt type compounds such as hydrochloride or acetate of alkylamine, quaternary ammonium type compounds such as alkyltrimethyl ammonium chloride or alkyldimethyl benzyl ammonium chloride, quaternary salt of alkylimidazoline, ethylene oxide addition products of alkylamine, and the like. In addition, the cationic polymers include polyamine or the salts thereof, such as polyethylene imine or the salts thereof, polyallyl amine, polydiallyl amine or polyvinyl amine, diallyl dialkyl ammonium salts such as polyamine sulfonates, polyamine epichlorohydrin condensates, polyamide epichlorohydrin condensates or quaternary ammonium salts of polydiallyl dimethyl, diallylamine acrylamide copolymer salts, quaternary ammonium salts of polystyrene, acrylic resins having tertiary amino group or quaternary ammonium group, and the like.

The composite sol of the second embodiment according to the present invention is characterized in that the colloidal composite particles therein are aggregated by drying to form a gel having large vacant spaces. As the sol has a relatively good viscosity and a good fluidity, and a good film-forming property, coating with no crack and a large thickness can be obtained by using along with a small amount of aqueous resin. In addition, the coating exhibits a relatively hard and a flaw resistance.

Consequently, the coating composition for ink receiving layer of the second embodiment according to the present invention exhibits viscosity and fluidity suitable for coating and therefore, upon applying and drying, an ink receiving layer that is smooth and substantially free of cracks, and has a good brilliance can be obtained. In addition, the resulting receiving layer has a good antistatic effect due to the presence of the colloidal silica particles and OH groups on the surface of the colloidal silica particles contained therein, and the presence of cations and anions coexisting therein.

The aqueous resin used in the second embodiment of the present invention includes natural polymers, water-soluble resins, resin emulsions and the like. The natural polymer includes casein, soybean protein, starch, gelatin and the like. Examples of the water-soluble resin include those resins having a hydroxyl group as a hydrophilic structure unit, such as polyvinyl alcohol (PVA), cellulose base resins (methylcellulose (MC), ethylcellulose (EC), hydroxyethylcellulose (HEC), carboxymethylcellulose (CMC) and the like), chitins and starch, those resins having an ether bond as a hydrophilic structure, such as polyethylene oxide (PEO), polypropylene oxide (PPO), polyethylene glycol (PEG) and polyvinyl ether (PVE), and those resins having an amido group or an amido bond as a hydrophilic structure unit, such as polyacrylamide (PAAM) and polyvinylpyrrolidone (PVP). The resin emulsion includes conjugated diene copolymer emulsions such as styrene-butadiene copolymer emulsion and methyl methacrylate-butadiene copolymer emulsion, vinyl polymer emulsions such as acrylic polymer emulsions, styrene-acryl copolymer emulsion, ethylene-vinyl acetate copolymer, ester polymer emulsions, urethane polymer emulsions, acryl silicone polymer emulsion, acryl urethane polymer emulsion, acryl epoxy polymer emulsion, silicone polymer emulsion, olefin polymer emulsions, epoxy polymer emulsions, vinylidene chloride emulsions and the like. One or more selected from the group consisting of these aqueous resins used for coating paper or film may be used.

When the above-mentioned composite sol has a cationic property, cation-modified water-soluble resin and cationic resin emulsions may be used as necessary. Amorphous alumina sol or alumina sol having boehmite structure may be used in combination therewith.

The coating composition for ink receiving layer of the second embodiment according to the present invention can be obtained basically by a method of mixing a composite sol and an aqueous resin solution. In a case of resin emulsions, a composite sol may also be added to monomers for polymerization at the time of producing resin emulsions.

In the second embodiment of the present invention, the mixing ratio of the colloidal composite particles and the aqueous resin is preferably 100:2 to 100:100, particularly 100:5 to 100:50 as a weight ratio of colloidal composite particle : aqueous resin. When the weight ratio exceeds 100:2, it is not preferable because the resulting receiving layer suffers severe crack generation or uneven infiltration of ink. On the other hand, when the weight ratio is less than 100:100, the resin is major, which makes the amount of ink absorption and absorption rate smaller, so that such weight ratio is not preferable.

In the second embodiment of the present invention, the total amount of the colloidal composite particles and the aqueous resin in the coating composition for ink receiving layer is preferably 5 to 40% by weight. If it is less than 5% by weight, no receiving layer having sufficient film thickness can be obtained while when it exceeds 40% by weight, the viscosity of the coating composition is too high or dries too fast and therefore, such weights are not preferable. In the present invention, 10 to 30% by weight is particularly preferable.

In the coating composition for ink receiving layer of the second embodiment according to the present invention, besides the colloidal composite particles, it is possible to use singly or in combination of various pigments publicly known and used in the field of general coated paper production, for example, kaolin, clay, calcined clay, general amorphous silica having large particle, general synthetic amorphous silica having large particle, zinc oxide, aluminum oxide, aluminum hydroxide, calcium carbonate, satin white, aluminum silicate, alumina, colloidal silica particles, zeolite, synthetic zeolite, sepiolite, smectites, synthetic smectites, magnesium silicate, magnesium carbonate, magnesium oxide, diatomaceous earth, styrene plastic pigment, hydrotalcite, urea resin plastic pigment, benzoguanamine plastic pigment. One or more selected from the group consisting of these pigments can be used.

The solvent in the coating composition for ink receiving layer of the second embodiment according to the present invention is generally water. If necessary, a small amount of water-soluble organic solvent such as alcohols, glycols and the like can be used.

The coating composition for ink receiving layer of the second embodiment according to the present invention mainly comprises the colloidal composite particles and the aqueous resin, and in addition thereto, it may contain various inorganic salts for increasing dispersibility of particles and may contain acids or alkalis as a pH adjusting agent. For the purpose of increasing coatability or surface quality, various surfactants may be used. To suppress triboelectric charging or peeling charging on the surface or to adjust surface electrical resistance in electron photography, it may contain surfactants having ion conductivity or metal oxide fine particles having electroconductivity. Also, for the purpose of fixing the pigment in ink recording to increase water resistance, a mordant may be used. For the purpose of decreasing the friction property of the surface, it may contain matting agent. For the purpose of preventing the deterioration of coloring material, it may contain various antioxidants and ultraviolet absorbents.

The paper substrate on which the coating composition for ink receiving layer of the second embodiment according to the present invention is coated is not particularly limited and acid paper, neutral paper or the like used in general coated paper is preferably used. Also, sheets having porosity and air permeability may be deemed as paper substrate.

The plastic films/sheets on which the coating composition for ink receiving layer of the second embodiment according to the present invention is coated include, for example, plastic films/sheets having very high transparency such as cellophane, polyethylene, polypropylene, flexible polyvinyl chloride, hard polyvinyl chloride, and polyester (PET and the like) and films/sheets having low transparency such as white PET and synthetic paper. As the above-mentioned substrate, a laminate of paper and plastic film/sheet may be used.

The coating composition for ink receiving layer of the second embodiment according to the present invention may be coated on the above paper substrate or plastic films/sheets using various known coaters such as a blade coater, an air knife coater, a roll coater, a bar coater, a gravure coater, a rod blade coater, a die coater, a lip coater, and a curtain coater. After the coating, it is dried at 60 to 180°C by means of a hot-air drier or the like to thereby form an ink receiving layer. Further, after the coating and drying, the ink receiving layer may be passed through between roll nips in, for example, spray calender, gloss calender or the like under heating and compression so that surface smoothness, transparency and film strength can be increased.

The ink receiving layer obtained by coating the coating composition for ink receiving layer of the second embodiment according to the present invention on paper or film or sheet and drying it has a film thickness in the range of preferably 10 to 50 µm.

If the film thickness is less than 10 µm, the absorptivity and absorption speed of ink decrease and therefore, such thickness is not preferable. On the other hand, if it exceeds 50 µm, the amount of the coating composition for ink receiving layer to be used is too large, which makes the coating difficult or cracks tend to occur and thus, such thickness is not preferable.

Hereinafter, examples and comparative examples relating to the composite sol and its production process of the first embodiment according to the present invention are shown.

### Example 1

To 10 L-glass container, were added 469 g (SiO₂ content: 164.2 g) of alkaline silica sol having a specific surface area diameter (particle diameter measured by nitrogen absorption method) of 22.0 nm (SNOWTEX M-30 (trade name) manufactured by Nissan Chemical Industries, Ltd., specific gravity: 1.248, viscosity: 7.8 mPa·s, pH 9.7, electric conductance: 1885 µS/cm, silica concentration: 35.1% by weight, Na₂O concentration: 0.16% by weight) and 3000 g of pure water, and 19.4 g (H₃PO₄ content: 16.5 g) of 85% aqueous solution of phosphoric acid was added thereto with stirring by Disper type agitator at 1500 rpm and continued stirring for 20 minutes to obtain a mixture liquid (a) (pH 1.96, silica concentration: 4.71% by weight, phosphoric acid (H₃PO₄) concentration: 0.473% by weigh). At this stage, little change in transparence of sol and colloid color (whiteness) was confirmed and little aggregation of colloidal silica particles was confirmed by an observation with electron microscope. Then, 1000 g of pure water was added to 35.6 g (Al₂O₃ content: 7.48 g) of an aqueous solution of sodium aluminate (NA-150 (trade name) manufactured by Sumitomo Chemical Company, Ltd., specific gravity: 1.502, viscosity: 177 mPa·s, Al₂O₃ concentration: 21.0% by weight, Na₂O concentration: 19.0% by weight, Na/Al molar ratio: 1.5) to obtain 1035.6 g of aqueous solution of sodium aluminate having Al₂O₃ concentration of 0.72% by weight.

1035.6 g of the aqueous solution of sodium aluminate was continuously added to the mixture liquid (a) over 10 minutes with stirring by Disper type agitator at 2500 rpm and continued stirring for 20 minutes. In this reaction, the ratio of aluminate ion to phosphate ion was 0.872 in (Al/PO₄) molar ratio, that is, phosphate ion was more than aluminate ion. This is because it is difficult to form aluminum phosphate by the reaction of the whole aluminate ion with the phosphate ion if the reaction would not be carried out in a state where phosphate ion is more.

At this stage, colloid color (whiteness) of liquid was increased and it was clearly confirmed that aggregation of colloidal silica particles by aluminum phosphate occurred. Physical properties of the liquid at this stage were as follows: pH 9.14, electric conductance: 3.17 mS/cm, and particle diameter measured by dynamic light scattering method: 270 nm. in order to control pH of this liquid, 73 g of 10% aqueous solution of sulfuric acid was continuously added over 5 minutes with stirring of 2500 rpm, and continued stirring for 40 minutes.

The resulting mixture liquid (b) had the following physical properties: weight ratio of silica to aluminum phosphate (in terms of SiO₂ : AIPO₄) of 90.2:9.8, pH 6.13, electric conductance: 4.21 mS/cm, colloidal silica concentration: 3.563% by weight, aluminum phosphate concentration (in terms of AIPO₄): 0.388% by weight, total concentration of silica and aluminum phosphate: 3.951% by weight and particle diameter measured by dynamic light scattering method: 268 nm.

Next, the resulting mixture liquid (b) was matured at 90°C for 2 hours with stirring of a stirring rate of 1500 rpm so as not to evaporate, and thereafter cooled.

4608 g of composite sol (pH 5.75, electric conductance: 4.22 mS/cm, total concentration of silica and aluminum phosphate: 3.951% by weight and particle diameter measured by dynamic light scattering method: 265 nm) was obtained.

4608 g of the sol was concentrated with a plane membrane of ultrafiltration membrane (Ultrafilter manufactured by Advantec Toyo Roshi Kaisha , Ltd., differential molecular weight: 50000) to about 1200 g, and 1300 g of pure water added thereto, and further concentrated to 721 g. This concentration allowed to reduce ions in the sol, such as phosphate ions or sodium ions.

The resulting sol having a high concentration had the following physical properties: silica concentration: 22.77% by weight, aluminum phosphate concentration (in terms of AlPO₄): 2.48% by weight, total concentration of silica and aluminum phosphate: 25.17% by weight, pH 5.98, viscosity: 21.3 mPa·s, specific gravity: 1.166, electric conductance: 2150 µS/cm, weight ratio of silica to aluminum phosphate (in terms of SiO₂ : AIPO₄) 90.2:9.8, specific surface area by nitrogen absorption method: 113 m²/g, particle diameter measured by nitrogen absorption method (true specific gravity is set to 2.2): 24.1 nm, and particle diameter measured by dynamic light scattering method: 239 nm. Zeta potential of the sol was negative at the whole pH region

As a result of an observation with electron microscope, it was found that the colloidal composite particles in the sol were in the shape of two-dimensional or three-dimensional aggregate formed by bonding the colloidal silica particles with the aluminum phosphate. In addition, no particles composed of only aluminum phosphate was confirmed. It became clear that the colloidal silica particles and aluminum phosphate are present in a state of composite not a state of mixture.

The sol generated merely a very few precipitation, occurred no increase in viscosity and underwent no gelling even after it was left to stand at 20°C for 3 months or more. Therefore, this sol was stable.

### Example 2

To 10 L-glass container, were added 629 g (SiO₂ content: 127.1 g) of acid silica sol having a specific surface area diameter (particle diameter measured by nitrogen absorption method) of 11.0 nm (SNOWTEX O (trade name) manufactured by Nissan Chemical Industries, Ltd., specific gravity: 1.127, viscosity: 2.2 mPa·s, pH 2.5, electric conductance: 439 µS/cm, silica concentration: 20.2% by weight, Na₂O (in colloidal silica particles) concentration: 0.03% by weight, chlorine ion concentration: 10 ppm or less, sulfuric ion concentration: 10 ppm or less, particle diameter measured by dynamic light scattering method: 20 nm) and 2800 g of pure water, and 29.8 g (H₃PO₄ content: 25.3 g) of 85% aqueous solution of phosphoric acid was added thereto with stirring by Disper type agitator at 1500 rpm and continued stirring for 20 minutes to obtain a mixture liquid (a) (pH 1.84, silica concentration: 3.67% by weight, phosphoric acid (H₃PO₄) concentration: 0.73% by weigh). At this stage, little change in transparence of sol and colloid color (whiteness) was confirmed and little aggregation of colloidal silica particles was confirmed by an observation with electron microscope. Then, 1000 g of pure water was added to 54.6 g (Al₂O₃ content: 11.47 g) of an aqueous solution of sodium aluminate (NA-150 (trade name)) described in Example 1 to obtain 1054.6 g of aqueous solution of sodium aluminate having Al₂O₃ concentration of 1.09% by weight.

1054.6 g of the aqueous solution of sodium aluminate was continuously added to the mixture liquid (a) over 10 minutes with stirring by Disper type agitator at 2500 rpm and continued stirring for 20 minutes. At this stage, colloid color (whiteness) of liquid was increased and it was clearly confirmed that aggregation of colloidal silica particles by aluminum phosphate occurred. Physical properties of the liquid at this stage were as follows: pH 8.85, electric conductance: 3.96 mS/cm, and particle diameter measured by dynamic light scattering method: 470 nm. In order to control pH of this liquid, 102.5 g of 10% aqueous solution of sulfuric acid was continuously added over 5 minutes with stirring of 2500 rpm, and continued stirring for 1 hour.

The resulting mixture liquid (b) had the following physical properties: silica concentration: 2.753% by weight, aluminum phosphate concentration (in terms of AIPO₄): 0.594% by weight, total concentration of silica and aluminum phosphate: 3.347% by weight, weight ratio of silica to aluminum phosphate (in terms of SiO₂ : AIPO₄) of 82.3:17.7, pH 5.96, electric conductance: 5.38 mS/cm, and particle diameter measured by dynamic light scattering method: 472 nm.

Next, the resulting mixture liquid (b) was matured at 90°C for 2 hours with stirring of a stirring rate of 1500 rpm so as not to evaporate, and thereafter cooled.

4616 g of composite sol (pH 5.58, electric conductance: 5.38 mS/cm, and particle diameter measured by dynamic light scattering method: 460 nm) was obtained. 4616 g of the sol was concentrated with a plane membrane of ultrafiltration membrane (Ultrafilter manufactured by Advantec Toyo Roshi Kaisha , Ltd., differential molecular weight: 50000) to about 1000 g, and 1400 g of pure water added thereto, and further concentrated to 574 g.

The resulting composite sol having a high concentration had the following physical properties: silica concentration: 22.14% by weight, aluminum phosphate concentration (in terms of AIPO₄): 4.78% by weight, total concentration of silica and aluminum phosphate: 26.92% by weight, pH 5.73, viscosity: 17.4 mPa·s, specific gravity: 1.186, electric conductance: 4140 µS/cm, weight ratio of silica to aluminum phosphate (in terms of SiO₂: AIPO₄) 82.3:17.7, specific surface area by nitrogen absorption method: 195 m²/g, particle diameter measured by nitrogen absorption method (true specific gravity is set to 2.2): 13.9 nm, and particle diameter measured by dynamic light scattering method: 356 nm. Zeta potential of the sol was negative at the whole pH region.

As a result of an observation with electron microscope, it was found that the colloidal composite particles in the sol were in the shape of two-dimensional or three-dimensional aggregate formed by bonding the colloidal silica particles with the aluminum phosphate. In addition, no particles composed of only aluminum phosphate was confirmed. It became clear that the colloidal silica particles and aluminum phosphate are present in a state of composite not a state of mixture.

The sol generated merely a very few precipitation, occurred no increase in viscosity and underwent no gelling even after it was left to stand at 20°C for 3 months or more. Therefore, this sol was stable.

### Example 3

To 10 L-glass container, were added 410 g (SiO₂ content: 166.1 g) of acid silica sol having a specific surface area diameter (particle diameter measured by nitrogen absorption method) of 21.5 nm (SNOWTEX O-40 (trade name) manufactured by Nissan Chemical Industries, Ltd., specific gravity: 1.290, viscosity: 4.1 mPa·s, pH 2.65, electric conductance: 950 µS/cm, silica concentration: 40.5% by weight, Na₂O (in colloidal silica particles) concentration: 0.13% by weight, particle diameter measured by dynamic light scattering method: 36.5 nm) and 3000 g of pure water, and 16.9 g (H₃PO₄ content: 14.37 g) of 85% aqueous solution of phosphoric acid was added thereto with stirring by Disper type agitator at 1500 rpm and continued stirring for 10 minutes to obtain a mixture liquid (a) (pH 1.86, silica concentration: 4.85% by weight, phosphoric acid (H₃PO₄) concentration: 0.419% by weigh). At this stage, little change in transparence of sol and colloid color (whiteness) was confirmed and little aggregation of colloidal silica particles was confirmed by an observation with electron microscope. Then, 1000 g of pure water was added to 31.0 g (Al₂O₃ content: 6.51 g) of an aqueous solution of sodium aluminate (NA-150 (trade name)) described in Example 1 to obtain 1031 g of aqueous solution of sodium aluminate having Al₂O₃ concentration of 0.631% by weight.

1031 g of the aqueous solution of sodium aluminate was continuously added to the mixture liquid (a) over 10 minutes with stirring by Disper type agitator at 2500 rpm and continued stirring for 30 minutes.

The resulting mixture liquid (b) had the following physical properties: silica concentration: 3.725% by weight, aluminum phosphate concentration (in terms of AlPO₄): 0.349% by weight, total concentration of silica and aluminum phosphate: 4.074% by weight, weight ratio of silica to aluminum phosphate (in terms of SiO₂ : AlPO₄) of 91.4:8.6, pH 8.60, electric conductance: 2.58 mS/cm, and particle diameter measured by dynamic light scattering method: 208 nm.

Next, the resulting mixture liquid (b) was matured at 80°C for 2 hours with stirring of a stirring rate of 1500 rpm so as not to evaporate, and thereafter cooled.

4458 g of composite sol (pH 7.75, electric conductance: 2.56 mS/cm, total concentration of silica and aluminum phosphate: 4.074% by weight, and particle diameter measured by dynamic light scattering method: 200 nm) was obtained. 4458 g of the sol was concentrated with a plane membrane of ultrafiltration membrane (Ultrafilter manufactured by Advantec Toyo Roshi Kaisha, Ltd., differential molecular weight: 50000) to 720 g.

The resulting composite sol having a high concentration had the following physical properties: silica concentration: 23.06% by weight, aluminum phosphate concentration (in terms of AlPO₄): 2.16% by weight, total concentration of silica and aluminum phosphate: 25.22% by weight, pH 8.62, viscosity: 6.7 mPa·s, specific gravity: 1.170, electric conductance: 3600 µS/cm, weight ratio of silica to aluminum phosphate (in terms of SiO₂ : AlPO₄) 91.4:8.6, specific surface area by nitrogen absorption method: 109 m²/g, particle diameter measured by nitrogen absorption method (true specific gravity is set to 2.2): 24.9 nm, and particle diameter measured by dynamic light scattering method: 214 nm. Zeta potential of the sol was negative at the whole pH region

As a result of an observation with electron microscope, it was found that the colloidal composite particles in the sol were in the shape of two-dimensional or three-dimensional aggregate formed by bonding the colloidal silica particles with the aluminum phosphate. In addition, no particles composed of only aluminum phosphate was confirmed. It became clear that the colloidal silica particles and aluminum phosphate are present in a state of composite not a state of mixture.

The sol generated merely a very few precipitation, occurred no increase in viscosity and underwent no gelling even after it was left to stand at 20°C for 3 months or more. Therefore, this sol was stable.

### Example 4

To 10 L-glass container, were added 375 g (SiO₂ content: 131.3 g) of alkaline silica sol having a specific surface area diameter (particle diameter measured by nitrogen absorption method) of 22.0 nm (SNOWTEX M30 (trade name)) described in Example 1 and 2400 g of pure water, and 17.6 g (H₃PO₄ content: 14.96 g) of 85% aqueous solution of phosphoric acid was added thereto with stirring by Disper type agitator at 1500 rpm and continued stirring for 20 minutes to obtain a mixture liquid (a-1) (pH 1.90, silica concentration: 4.70% by weight, phosphoric acid (H₃PO₄) concentration: 0.536% by weigh). Then, 800 g of pure water was added to 28.5 g (Al₂O₃ content: 5.98 g) of an aqueous solution of sodium aluminate (NA-150 (trade name)) described in Example 1 to obtain 828.5 g of aqueous solution of sodium aluminate having Al₂O₃ concentration of 0.722% by weight.

828.5 g of the aqueous solution of sodium aluminate was continuously added to the mixture liquid (a-1) over 10 minutes with stirring by Disper type agitator at 2500 rpm and continued stirring for 20 minutes.

3621.5 g of a mixture liquid (b-1) (silica concentration: 3.625% by weight, aluminum concentration (in terms of AlPO₄): 0.395% by weight, total concentration of silica and aluminum phosphate: 4.02% by weight, weight ratio of silica to aluminum phosphate (in terms of SiO₂ : AlPO₄) of 90.2:9.8, pH 8.38, electric conductance: 3.28 mS/cm, and particle diameter measured by dynamic light scattering method: 264 nm) was obtained. In this reaction, the ratio of aluminate ion to phosphate ion was 0.769 in the molar ratio of (Al/PO₄).

17.6 g (H₃PO₄ content: 14.96 g) of 85% aqueous solution of phosphoric acid was added to the mixture liquid (b-1) with stirring at 2500 rpm, and continued stirring for 20 minutes to obtain a mixture liquid (a-2) (pH 4.18, electric conductance: 3.56 mS/cm).

On the other hand, 480 g of pure water was added to 28.5 g (Al₂O₃ content: 5.985 g) of an aqueous solution of sodium aluminate (NA-150 (trade name)) described in Example 1 to obtain 508.5 g of aqueous solution of sodium aluminate having Al₂O₃ concentration of 1.177% by weight.

508.5 g of the aqueous solution of sodium aluminate was continuously added to the mixture liquid (a-2) over 6 minutes with stirring at 2500 rpm and continued stirring for 20 minutes. 4147.6 g of a mixture liquid (b-2) (silica concentration: 3.166% by weight, aluminum phosphate concentration (in terms of AIPO₄): 0.690% by weight, total concentration of silica and aluminum phosphate: 3.856% by weight, weight ratio of silica to aluminum phosphate (in terms of SiO₂ : AIPO₄) of 82.1:17.9, pH 8.80, electric conductance: 4.81 mS/cm, and particle diameter measured by dynamic light scattering method: 362 nm was obtained.

17.6 g (H₃PO₄ content: 14.96 g) of 85% aqueous solution of phosphoric acid was added to the mixture liquid (b-2) with stirring at 2500 rpm, and continued stirring for 20 minutes to obtain a mixture liquid (a-3) (pH 6.24, electric conductance: 4.91 mS/cm).

On the other hand, 480 g of pure water was added to 28.5 g (Al₂O₃ content: 5.985 g) of an aqueous solution of sodium aluminate (NA-150 (trade name)) described in Example 1 to obtain 508.5 g of aqueous solution of sodium aluminate having Al₂O₃ concentration of 1.177% by weight.

508.5 g of the aqueous solution of sodium aluminate was continuously added to the mixture liquid (a-3) over 6 minutes with stirring at 2500 rpm and continued stirring for 20 minutes. 4673.7 g of a mixture liquid (b-3) (silica concentration: 2.809% by weight, aluminum phosphate concentration (in terms of AlPO₄): 0.91% by weight, total concentration of silica and aluminum phosphate: 3.728% by weight, weight ratio of silica to aluminum phosphate (in terms of SiO₂ : AlPO₄) of 75.4:24.6, pH 9.31, electric conductance: 6.33 mS/cm, and particle diameter measured by dynamic light scattering method: 389 nm was obtained.

In order to control pH of the resulting mixture liquid (b-3), 144 g of 10% aqueous solution of sulfuric acid was continuously added thereto over 5 minutes with stirring at 2500 rpm, and continued stirring for 1 hour.

4817.7 g of a mixture liquid (b-4) (silica concentration: 2.725% by weight, aluminum phosphate concentration (in terms of AlPO₄): 0.891 % by weight, total concentration of silica and aluminum phosphate: 3.616% by weight, weight ratio of silica to aluminum phosphate (in terms of SiO₂ : AIPO₄) of 75.4:24.6, pH 5.56, electric conductance: 8.30 mS/cm, and particle diameter measured by dynamic light scattering method: 390 nm was obtained.

Next, the resulting mixture liquid (b-4) was matured at 90°C for 2 hours with stirring at 1500 rpm with Disper type agitator so as not to evaporate, and thereafter cooled.

4817.7 g of composite sol (pH 5.48, electric conductance: 8.36 mS/cm, and particle diameter measured by dynamic light scattering method: 387 nm) was obtained.

4817.7 g of the sol was concentrated with a plane membrane of ultrafiltration membrane (Ultrafilter manufactured by Advantec Toyo Roshi Kaisha , Ltd., differential molecular weight: 50000) to about 1200 g, and 1200 g of pure water added thereto, and further concentrated to obtain 1432 g of sol.

The resulting composite sol having a high concentration had the following physical properties: silica concentration: 9.169% by weight, aluminum phosphate concentration (in terms of AIPO₄): 3.00% by weight, total concentration of silica and aluminum phosphate: 12.169% by weight, pH 5.75, viscosity: 27.3 mPa·s, specific gravity: 1.084, electric conductance: 3840 µS/cm, weight ratio of silica to aluminum phosphate (in terms of SiO₂ : AIPO₄) 75.4:24.6, specific surface area by nitrogen absorption method: 109 m²/g, particle diameter measured by nitrogen absorption method (true specific gravity is set to 2.2): 25.0 nm, and particle diameter measured by dynamic light scattering method: 360 nm. Zeta potential of the sol was negative at the whole pH region.

As a result of an observation with electron microscope, it was found that the colloidal composite particles in the sol were in the shape of two-dimensional or three-dimensional aggregate formed by bonding the colloidal silica particles with the aluminum phosphate. In addition, no particles composed of only aluminum phosphate was confirmed. It became clear that the colloidal silica particles and aluminum phosphate are present in a state of composite not a state of mixture. Further, the colloidal silica particles became clearly large, and it was understood that the aluminum phosphate coated almost the whole surface of the colloidal silica particles.

The sol generated merely a very few precipitation, occurred no increase in viscosity and underwent no gelling even after it was left to stand at 20°C for 3 months or more. Therefore, this sol was stable.

### Example 5

To 5 L-glass container, 1879 g (SiO₂ content: 657.7 g) of alkaline silica sol having a specific surface area diameter (particle diameter measured by nitrogen absorption method) of 20.0 nm (SNOWTEX M-30 (trade name)) described in Example 1 was added, and 62.2 g (H₃PO₄ content: 29.92 g) of 48.1% aqueous solution of phosphoric acid was added thereto with stirring by Disper type agitator at 1500 rpm and continued stirring for 30 minutes to obtain a mixture liquid (a) (pH 1.94, electric conductance: 9.31 mS/cm, silica concentration: 33.88% by weight, phosphoric acid (H₃PO₄) concentration: 1.54% by weigh). At this stage, little change in transparence of sol and colloid color (whiteness) was confirmed and little aggregation of colloidal silica particles was confirmed by an observation with electron microscope. Then, 607 g of pure water was added to 57.1 g (Al₂O₃ content: 11.99 g) of an aqueous solution of sodium aluminate (NA-150 (trade name)) described in Example 1 to obtain 664.1 g of aqueous solution of sodium aluminate having Al₂O₃ concentration of 1.805% by weight.

664.1 g of the aqueous solution of sodium aluminate was continuously added to the mixture liquid (a) over 30 minutes with stirring by Disper type agitator at 3000 rpm to obtain mixture liquid (b). In this reaction, the ratio of aluminate ion to phosphate ion was 0.770 in (Al/PO₄) molar ratio. At this stage, colloid color (whiteness) of liquid was increased and aggregation of colloidal silica particles occurred. It was clear from an observation with electron microscope that aluminum phosphate formed by reaction of phosphate ion with aluminate ion in liquid (a) was adhered on the surface of colloidal silica particles, and further bonded them.

2605 g of mixture liquid (b) (silica concentration: 25.25% by weight, aluminum phosphate concentration: 1.10% by weight, total concentration of silica and aluminum phosphate: 26.35% by weight, pH 8.23, electric conductance: 8.04 mS/cm, and particle diameter measured by dynamic light scattering method: 129 nm was obtained.

Next, the resulting mixture liquid (b) was continued stirring also at a stirring rate of 3000 rpm for 5 hours. The temperature of mixture liquid (b) was 25°C immediately after producing it and 38°C after stirring.

2600 g of composite sol (silica concentration: 25.30% by weight, aluminum phosphate concentration: 1.10% by weight, total concentration of silica and aluminum phosphate: 26.40% by weight, weight ratio of silica to aluminum phosphate (in terms of SiO₂ : AlPO₄) 95.8: 4.2, pH 7.91, electric conductance: 7.92 mS/cm, specific surface area measured by nitrogen absorption method: 107 m²/g, particle diameter measured by nitrogen absorption method (true specific gravity is set to 2.2): 25.5 nm, and particle diameter measured by dynamic light scattering method: 118 nm) was obtained. Zeta potential of the sol was negative at the whole pH region.

As a result of an observation with electron microscope, it was found that the colloidal composite particles in the sol were mostly in the shape of two-dimensional aggregate and a little amount of three-dimensional aggregate.

The sol generated merely a very few precipitation, occurred no increase in viscosity and underwent no gelling even after it was left to stand at 20°C for 3 months or more. Therefore, this sol was stable.

### Example 6

1300 g (content of silica and aluminum phosphate: 343.2 g) of the composite sol having the total concentration of silica and aluminum phosphate of 26.40% by weight obtained in Example 5 was concentrated with the ultrafiltration membrane described in Example 1 to 1000 g. The resulting composite sol having a high concentration had the following physical properties: specific gravity: 1.254, pH 7.56, viscosity: 17.6 mPa·s, electric conductance: 7.63 mS/cm, and particle diameter measured by dynamic light scattering method: 116 nm.

The sol generated merely a very few precipitation, occurred no increase in viscosity and underwent no gelling even after it was left to stand at 20°C for 3 months or more. Therefore, this sol was stable.

### Example 7

To 5 L-glass container, were added 1415 g (SiO₂ content: 573.1 g) of acid silica sol having a specific surface area diameter (particle diameter measured by nitrogen absorption method) of 21.5 nm (SNOWTEX O-40 (trade name), silica concentration: 40.5% by weight) described in Example 3 and 170 g of pure water, and 37 g (H₃PO₄ content: 14.37 g) of 38.8% aqueous solution of phosphoric acid was added thereto with stirring by Disper type agitator at 1500 rpm and continued stirring for 30 minutes to obtain 1622 g of a mixture liquid (a) (pH 1.58, silica concentration: 35.33% by weight, phosphoric acid (H₃PO₄) concentration: 0.886% by weigh). At this stage, little change in transparence of sol and colloid color (whiteness) was confirmed and little aggregation of colloidal silica particles was confirmed by an observation with electron microscope. Then, 400 g of pure water was added to 15.5 g (Al₂O₃ content: 3.255 g) of an aqueous solution of sodium aluminate (NA-150 (trade name)) described in Example 1 to obtain 415.5 g of aqueous solution of sodium aluminate having Al₂O₃ concentration of 0.783% by weight.

415.5 g of the aqueous solution of sodium aluminate was continuously added to the mixture liquid (a) over 5 minutes with stirring by Disper type agitator at 4500 rpm and continued stirring for 15 minutes. The resulting mixture liquid (b) had the following physical properties: pH 5.28, and particle diameter measured by dynamic light scattering method: 195 nm. The appearance of the liquid was increased in colloid color (whiteness).

Next, 300 g of pure water was added to 18.4 g (Al₂O₃ content: 4.306 g) of an aqueous solution of basic aluminum chloride (Al₂(OH)₅Cl) (Takibine #1500 (trade name) manufactured by Taki Chemical Co., Ltd., Al₂O₃ concentration: 23.4% by weight, CI concentration: 8.25% by weight, specific gravity: 1.334, pH 3.74, viscosity: 15.6 mPa·s) to obtain 318.4 g of an aqueous solution of basic aluminum chloride (Al₂O₃ concentration: 1.352% by weight).

318.5 g of the aqueous solution of basic aluminum chloride was continuously added to the liquid to which sodium aluminate was added at the first stage, over 10 minutes with stirring of 4500 rpm. At this second stage, unreacted phosphate ions remaining in the liquid were reacted with basic aluminum ion, thereby the formation of aluminum phosphate was complete.

In these reactions at the first and second stages, the ratio of aluminate ion and basic aluminum ion to phosphate ion was 1.01 in (Al/PO₄) molar ratio.

2356 g of mixture liquid (b) (silica concentration: 24.33% by weight, aluminum phosphate concentration: 0.759% by weight, total concentration of silica and aluminum phosphate: 25.09% by weight, pH 4.87, electric conductance: 3.69 mS/cm, and particle diameter measured by dynamic light scattering method: 205 nm) was obtained.

Next, the resulting mixture liquid (b) was continued stirring also at 4500 rpm for 5 hours. The temperature of mixture liquid (b) was 28°C immediately after producing it and 48°C after stirring.

2345 g of composite sol (silica concentration: 24.44% by weight, aluminum phosphate concentration: 0.763% by weight, total concentration of silica and aluminum phosphate: 25.20% by weight, weight ratio of silica to aluminum phosphate (in terms of SiO₂ : AIPO₄) 97.0: 3.0, pH 4.76, electric conductance: 3.70 mS/cm, specific gravity: 1.176, viscosity: 6.8 mPa·s, particle diameter measured by dynamic light scattering method: 198 nm, specific surface area measured by nitrogen absorption method: 108 m²/g,and particle diameter measured by nitrogen absorption method (true specific gravity is set to 2.2): 25.2 nm) was obtained. Zeta potential of the sol was negative at the whole pH region

As a result of an observation with electron microscope, it was found that the colloidal composite particles in the sol were in the shape of two-dimensional or three-dimensional aggregate formed by bonding the colloidal silica particles with the aluminum phosphate.

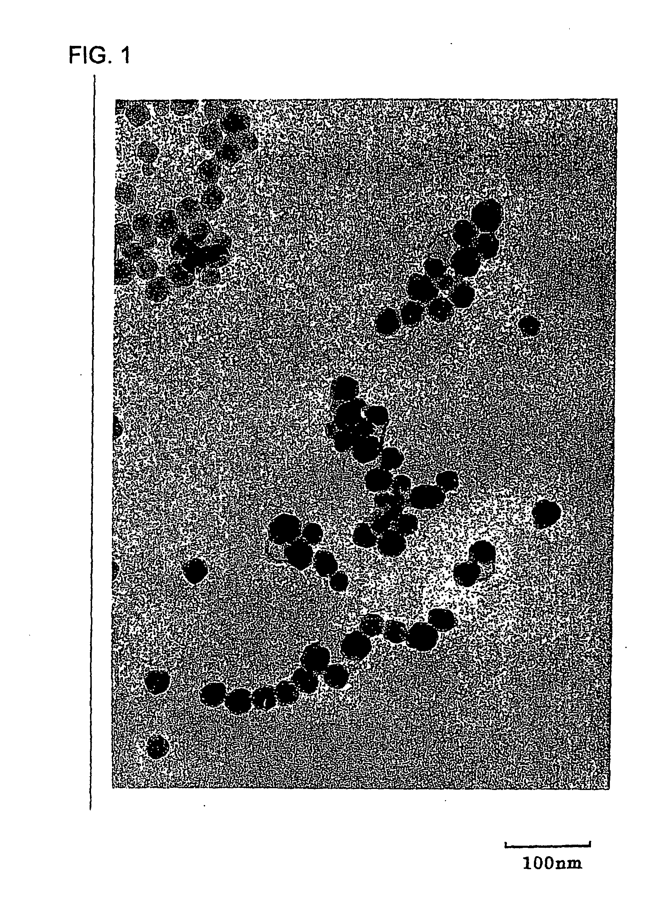

Fig. 1 shows a photograph of the colloidal composite particles obtained as mentioned above, which was taken with an electron microscope.

The sol generated merely a very few precipitation, occurred no increase in viscosity and underwent no gelling even after it was left to stand at 20°C for 3 months or more. Therefore, this sol was stable.

### Example 8

To 5 L-glass container, were added 1136 g (SiO₂ content: 460.1 g) of acid silica sol having a specific surface area diameter (particle diameter measured by nitrogen absorption method) of 21.5 nm (SNOWTEX O-40 (trade name), silica concentration: 40.5% by weight) described in Example 3 and 620 g of pure water, and 40.3 g (H₃PO₄ content: 17.26 g) of 42.8% aqueous solution of phosphoric acid was added thereto with stirring by Disper type agitator at 1500 rpm and continued stirring for 30 minutes to obtain 1796.3 g of mixture liquid (a) (pH 1.65, silica concentration: 25.61 % by weight, phosphoric acid (H₃PO₄) concentration: 0.961 % by weigh). At this stage, little change in transparence of sol and colloid color (whiteness) was confirmed and little aggregation of colloidal silica particles was confirmed by an observation with electron microscope. Then, 200 g of pure water was added to 20.5 g (Al₂O₃ content: 4.305 g) of an aqueous solution of sodium aluminate (NA-150 (trade name)) described in Example 1 to obtain 220.5 g of aqueous solution of sodium aluminate having Al₂O₃ concentration of 1.952% by weight.

220.5 g of the aqueous solution of sodium aluminate was continuously added to the mixture liquid (a) over 15 minutes with stirring by Disper type agitator at 4500 rpm and continued stirring for 30 minutes. The resulting liquid had the following physical properties: pH 5.86, and particle diameter measured by dynamic light scattering method: 285 nm. The appearance of the liquid was increased in colloid color (whiteness).

Next, 300 g of pure water was added to 24.0 g (Al₂O₃ content: 5.616 g) of an aqueous solution of basic aluminum chloride (Al₂(OH)₅Cl) (Takibine #1500 (trade name)) described in Example 7 to obtain 324.0 g of an aqueous solution of basic aluminum chloride (Al₂O₃ concentration: 1.733% by weight).

324.0 g of the aqueous solution of basic aluminum chloride was continuously added to the liquid to which sodium aluminate was added at the first stage, over 20 minutes with stirring of 4500 rpm.

In these reactions at the first and second stages, the ratio of aluminate ion and basic aluminum ion to phosphate ion was 1.09 in (Al/PO₄) molar ratio.

2340.8 g of mixture liquid (b) (silica concentration: 19.66% by weight, aluminum phosphate concentration: 0.940% by weight, total concentration of silica and aluminum phosphate: 20.59% by weight, pH 5.45, electric conductance: 4.37 mS/cm, and particle diameter measured by dynamic light scattering method: 282 nm was obtained.

Next, the resulting mixture liquid (b) was continued stirring also at 4500 rpm for 5 hours. The temperature of mixture liquid (b) was 28°C immediately after producing it and 46°C after stirring.

2330 g of mixture liquid (c) (pH 5.43, electric conductance: 4.37 mS/cm, viscosity: 7.0 mPa·s, and particle diameter measured by dynamic light scattering method: 248 nm) was obtained. The mixture liquid generated about 1.4% by weight of precipitants upon standing at 20°C for 3 days.

1040 g of mixture liquid (c) was placed in 2 L glass container and processed with ultrasonic homogenizer (manufactured by Nippon Seiki Seisakusho Co., Ltd., type US-1200CCVP, output: 1200 W , batch-type) for 1 minute.

The resulting composite sol had the following physical properties: silica concentration: 19.75% by weight, aluminum phosphate concentration: 0.944% by weight, total concentration of silica and aluminum phosphate: 20.69% by weight, weight ratio of silica to aluminum phosphate (in terms of SiO₂ : AlPO₄) 95.4: 4.6, pH 5.42, electric conductance: 4.27 mS/cm, specific gravity: 1.133, viscosity: 11.3 mPa·s, particle diameter measured by dynamic light scattering method: 216 nm, specific surface area measured by nitrogen absorption method: 109 m²/g, and particle diameter measured by nitrogen absorption method (true specific gravity is set to 2.2): 25.0 nm. Zeta potential of the sol was negative at the whole pH region.

As a result of an observation with electron microscope, it was found that the colloidal composite particles in the sol were in the shape of two-dimensional or three-dimensional aggregate formed by bonding the colloidal silica particles with the aluminum phosphate.

The sol generated merely a very few precipitation, occurred no increase in viscosity and underwent no gelling even after it was left to stand at 20°C for 3 months or more. Therefore, this sol was stable.

### Example 9

1000 g of the mixture liquid (c) described in Example 8 was taken, and processed one time at a process pressure of 200 Bar with high-pressure homogenizer (manufactured by SMT Co., Ltd., type LAB 1000).

The resulting composite sol had the following physical properties: silica concentration: 19.75% by weight, aluminum phosphate concentration: 0.944% by weight, total concentration of silica and aluminum phosphate: 20.69% by weight, weight ratio of silica to aluminum phosphate (in terms of SiO₂ : AIPO₄) 95.4: 4.6, pH 5.29, electric conductance: 4.30 mS/cm, specific gravity: 1.133, viscosity: 9.9 mPa·s, particle diameter measured by dynamic light scattering method: 211 nm, specific surface area measured by nitrogen absorption method: 109 m²/g, and particle diameter measured by nitrogen absorption method (true specific gravity is set to 2.2): 25.0 nm. Zeta potential of the sol was negative at the whole pH region.

As a result of an observation with electron microscope, it was found that the colloidal composite particles in the sol were mostly in the shape of two-dimensional aggregate and a little amount of three-dimensional aggregate.

The sol generated merely a very few precipitation, occurred no increase in viscosity and underwent no gelling even after it was left to stand at 20°C for 3 months or more. Therefore, this sol was stable.

### Example 10

38.0 g of pure water was added to 12.0 g (Al₂O₃ content: 2.52 g) of an aqueous solution of sodium aluminate (NA-150 (trade name)) described in Example 1 to obtain 50.0 g of aqueous solution of sodium aluminate having Al₂O₃ concentration of 5.04% by weight.

Then, 1500 g (SiO₂ content: 296.3 g, aluminum phosphate content: 14.16g) of the composite sol (silica concentration: 19.75% by weight, aluminum phosphate concentration: 0.944% by weight) described in Example 9 was placed in 3 L glass container, and 50.0 g of the aqueous solution of sodium aluminate was continuously added thereto with stirring by Disper type agitator at 3000 rpm and continued stirring for 1 hour to obtain mixture liquid (a). The liquid had the following physical properties: pH 8.27 and particle diameter measured by dynamic light scattering method: 220 nm.

70.0 g of 5% hydrochloric acid was gradually added to the mixture liquid (a) over 1 hour and 40 minutes with stirring at 3000 rpm and continued stirring for 1.5 hour to obtain mixture liquid (b). The liquid had the following physical properties: pH 4.64 and particle diameter measured by dynamic light scattering method: 354 nm.

Further, 3.25 g of 10% ammonia aqueous solution was added thereto with stirring at 3000 rpm over 2 minutes, and continued stirring for 2.5 hours.

1623.25 g of a composite sol (silica concentration: 18.25% by weight, aluminum phosphate concentration: 1.028% by weight, total concentration of silica and aluminum phosphate: 19.28% by weight, pH 5.60, electric conductance: 9.84 mS/cm, specific gravity: 1.130, viscosity: 46.8 mPa·s, particle diameter measured by dynamic light scattering method: 302 nm, specific surface area measured by nitrogen absorption method: 109 m²/g, and particle diameter measured by nitrogen absorption method (true specific gravity is set to 2.2): 25.0 nm) was obtained.

As a result of an observation with electron microscope, it was found that the colloidal composite particles in the sol were in the shape of two-dimensional or three-dimensional aggregate formed by bonding the colloidal silica particles with the aluminum phosphate.

The sol generated merely a very few precipitation, occurred no increase in viscosity and underwent no gelling even after it was left to stand at 20°C for 3 months or more. Therefore, this sol was stable.

### Example 11

To 5 L-glass container, were added 1666.3 g (SiO₂ content: 671.5 g) of acid silica sol having a specific surface area diameter (particle diameter measured by nitrogen absorption method) of 43.0 nm (SNOWTEX OL-40 (trade name) manufactured by Nissan Chemical Industries, Ltd., specific gravity: 1.289, viscosity: 3.0 mPa·s, pH 2.40, electric conductance: 1.35 mS/cm, silica concentration: 40.3% by weight, particle diameter measured by dynamic light scattering method: 84.5 nm) and 247.1 g of pure water, and 29.7 g (H₃PO₄ content: 25.25 g) of 85% aqueous solution of phosphoric acid was added thereto with stirring by Disper type agitator at 1500 rpm and continued stirring for 20 minutes to obtain a mixture liquid (a) (pH 1.46, silica concentration: 34.56% by weight, phosphoric acid (H₃PO₄) concentration: 1.30% by weigh). At this stage, little change in transparence of sol and colloid color (whiteness) was confirmed and little aggregation of colloidal silica particles was confirmed by an observation with electron microscope. Then, 120 g of pure water was added to 29.7 g (Al₂O₃ content: 6.24 g) of an aqueous solution of sodium aluminate (NA-150 (trade name)) described in Example 1 to obtain 149.7 g of aqueous solution of sodium aluminate having Al₂O₃ concentration of 4.17% by weight.

149.7 g of the aqueous solution of sodium aluminate was continuously added to the mixture liquid (a) over 11 minutes with stirring by Disper type agitator at 3000 rpm and continued stirring for 20 minutes. The resulting liquid had the following physical properties: pH 5.74, and particle diameter measured by dynamic light scattering method: 173 nm.

Next, 180.0 g of pure water was added to 34.8 g (Al₂O₃ content: 8.143 g) of an aqueous solution of basic aluminum chloride (Al₂(OH)₅Cl) (Takibine #1500 (trade name)) described in Example 7 to obtain 214.8 g of an aqueous solution of basic aluminum chloride (Al₂O₃ concentration: 3.791% by weight).

214.8 g of the aqueous solution of basic aluminum chloride was continuously added to the liquid to which sodium aluminate was added at the first stage, over 17 minutes with stirring of 3000 rpm. In these reactions at the first and second stages, the ratio of aluminate ion and basic aluminum ion to phosphate ion was 1.10 in (Al/PO₄) molar ratio. Next, the liquid was continued stirring also at 3000 rpm for 2 hours to obtain mixture liquid (b).

The resulting mixture liquid (b) had the following physical properties: pH 5.40, electric conductance: 5.64 mS/cm, and particle diameter measured by dynamic light scattering method: 325 nm. The mixture liquid (b) generated a few amount of precipitants upon standing at 20°C for 7 days.

2300 g of the mixture liquid (b) was taken, and processed one time at a process pressure of 400 Bar with high-pressure homogenizer (manufactured by SMT Co., Ltd., type LAB 1000).

The resulting composite sol had the following physical properties: silica concentration: 29.10% by weight, aluminum phosphate concentration: 1.39% by weight, total concentration of silica and aluminum phosphate: 30.49% by weight, weight ratio of silica to aluminum phosphate (in terms of SiO₂ : AIPO₄) 95.4: 4.6, pH 5.40, electric conductance: 5.80 mS/cm, specific gravity: 1.230, viscosity: 85.6 mPa·s, particle diameter measured by dynamic light scattering method: 283 nm, specific surface area measured by nitrogen absorption method: 63 m²/g, and particle diameter measured by nitrogen absorption method: 43 nm. Zeta potential of the sol was negative at the whole pH region.

As a result of an observation with electron microscope, it was found that the colloidal composite particles in the sol were in the shape of two-dimensional or three-dimensional aggregate formed by bonding the colloidal silica particles with the aluminum phosphate.

The sol generated merely a very few precipitation, occurred no increase in viscosity and underwent no gelling even after it was left to stand at 20°C for 3 months or more. Therefore, this sol was stable.

### Example 12

88.1 g of pure water was added to 2000 g (SiO₂ content: 806 g) of alkaline silica sol having a specific surface area diameter (particle diameter measured by nitrogen absorption method) of 81.5 nm (SNOWTEX ZL (trade name) manufactured by Nissan Chemical Industries, Ltd., specific gravity: 1.292, viscosity: 2.6 mPa·s, pH 9.8, electric conductance: 2.47 mS/cm, silica concentration: 40.3% by weight, particle diameter measured by dynamic light scattering method: 118 nm) to obtain a silica sol having a silica concentration of 38.6% by weight. Then, the silica sol was passed through a column in which cation exchange resin (Amberlite IR-120B (trade name)) was filled to obtain 1950 g of an acid silica sol. The acid silica sol had the following physical properties: specific gravity: 1.275, viscosity: 3.2 mPa·s, pH 2.06, electric conductance: 4.26 mS/cm, silica concentration: 38.6% by weight, particle diameter measured by dynamic light scattering method: 124 nm, specific surface area measured by nitrogen absorption method: 33.4 m²/g, and particle diameter measured by nitrogen absorption method: 81.5 nm.

1700 g (SiO₂ content: 656.2 g) of the acid silica sol was placed in 5 L glass container, and 14.5 g (H₃PO₄ content: 12.33 g) of 85% aqueous solution of phosphoric acid was added thereto with stirring by Disper type agitator at 1500 rpm and continued stirring for 20 minutes to obtain a mixture liquid (a) (pH 1.40, silica concentration: 38.27% by weight, phosphoric acid (H₃PO₄) concentration: 0.72% by weigh). At this stage, little change in transparence of sol and colloid color (whiteness) was confirmed and little aggregation of colloidal silica particles was confirmed by an observation with electron microscope. Then, 100 g of pure water was added to 14.6 g (Al₂O₃ content: 3.07 g) of an aqueous solution of sodium aluminate (NA-150 (trade name)) described in Example 1 to obtain 114.6 g of aqueous solution of sodium aluminate having Al₂O₃ concentration of 2.68% by weight.

114.6 g of the aqueous solution of sodium aluminate was continuously added to the mixture liquid (a) over 8 minutes with stirring by Disper type agitator at 3000 rpm and continued stirring for 20 minutes. The resulting liquid had the following physical properties: pH 5.10, and particle diameter measured by dynamic light scattering method: 125 nm.

Next, 150.0 g of pure water was added to 17.1 g (Al₂O₃ content: 4.00 g) of an aqueous solution of basic aluminum chloride (Al₂(OH)₅Cl) (Takibine #1500 (trade name)) described in Example 7 to obtain 167.1 g of an aqueous solution of basic aluminum chloride (Al₂O₃ concentration: 2.39% by weight).

167.1 g of the aqueous solution of basic aluminum chloride was continuously added to the liquid to which sodium aluminate was added at the first stage, over 13 minutes with stirring of 3000 rpm. In these reactions at the first and second stages, the ratio of aluminate ion and basic aluminum ion to phosphate ion was 1.10 in (Al/PO₄) molar ratio. Next, the liquid was continued stirring also at 3000 rpm for 2 hours.

1996.2 g of a composite sol (silica concentration: 32.87% by weight, aluminum phosphate concentration: 0.79% by weight, total concentration of silica and aluminum phosphate: 33.66% by weight, weight ratio of silica to aluminum phosphate (in terms of SiO₂ : AIPO₄) 97.7: 2.3, pH 4.51, electric conductance: 4.40 mS/cm, specific gravity: 1.235, viscosity: 29.3 mPa·s, particle diameter measured by dynamic light scattering method: 384 nm, specific surface area measured by nitrogen absorption method: 33.2 m²/g, and particle diameter measured by nitrogen absorption method: 82.0 nm. Zeta potential of the sol was negative at the whole pH region.

As a result of an observation with electron microscope, it was found that the colloidal composite particles in the sol were in the shape of two-dimensional or three-dimensional aggregate formed by bonding the colloidal silica particles with the aluminum phosphate.

The sol generated merely a very few precipitation, occurred no increase in viscosity and underwent no gelling even after it was left to stand at 20°C for 3 months or more. Therefore, this sol was stable.

### Comparative Example 1

To 5 L-glass container, were added 1415 g (SiO₂ content: 573.1 g) of acid silica sol having a specific surface area diameter (particle diameter measured by nitrogen absorption method) of 21.5 nm (SNOWTEX O-40 (trade name), silica concentration: 40.5% by weight) described in Example 3 and 170 g of pure water, and 37 g (H₃PO₄ content: 1.437 g) of 3.88% aqueous solution of phosphoric acid was added thereto with stirring by Disper type agitator at 1500 rpm and continued stirring for 30 minutes to obtain a mixture liquid (a) (pH 2.37, silica concentration: 35.33% by weight, phosphoric acid (H₃PO₄) concentration: 0.0886% by weigh). At this stage, little change in transparence of sol and colloid color (whiteness) was confirmed and no aggregation of colloidal silica particles was confirmed by an observation with electron microscope, and the sol was the same as SNOWTEX-O-40. Then, 414 g of pure water was added to 1.55 g (Al₂O₃ content: 0.326 g) of an aqueous solution of sodium aluminate (NA-150 (trade name)) described in Example 1 to obtain 415.5 g of aqueous solution of sodium aluminate having Al₂O₃ concentration of 0.0784% by weight.

415.6 g of the aqueous solution of sodium aluminate was continuously added to the mixture liquid (a) over 5 minutes with stirring by Disper type agitator at 3000 rpm and continued stirring for 15 minutes. The pH of the resulting liquid was 3.42, and the colloid color (whiteness) was little increased.

Next, 300 g of pure water was added to 1.84 g (Al₂O₃ content: 0.431 g) of an aqueous solution of basic aluminum chloride (Takibine) described in Example 7 to obtain 301.8 g of an aqueous solution of basic aluminum chloride (Al₂O₃ concentration: 0.143% by weight).

301.8 g of the aqueous solution of basic aluminum chloride was continuously added to the liquid to which sodium aluminate was added at the first stage, over 10 minutes with stirring of 3000 rpm. Also at this second stage, colloid color (whiteness) of the sol was merely increased a little.

In these reactions at the first and second stages, the ratio of aluminate ion and basic aluminum ion to phosphate ion was 1.01 in (Al/PO₄) molar ratio.

2339.4 g of mixture liquid (b) (silica concentration: 24.50% by weight, aluminum phosphate concentration: 0.0764% by weight, total concentration of silica and aluminum phosphate: 24.58% by weight, pH 3.65, electric conductance: 765 µS/cm, and particle diameter measured by dynamic light scattering method: 65.2 nm) was obtained.

Next, the resulting mixture liquid (b) was continued stirring also at 3000 rpm for 5 hours. The temperature of mixture liquid (b) was 25°C immediately after producing it and 33°C after stirring.

2335 g of composite sol (silica concentration: 24.54% by weight, aluminum phosphate concentration: 0.0766% by weight, total concentration of silica and aluminum phosphate: 24.62% by weight, weight ratio of silica to aluminum phosphate (in terms of SiO₂ : AlPO₄) 99.69: 0.31, pH 3.54, electric conductance: 765 µS/cm, specific gravity: 1.159, viscosity: 4.8 mPa·s, particle diameter measured by dynamic light scattering method: 61.7 nm, specific surface area measured by nitrogen absorption method: 117 m²/g, and particle diameter measured by nitrogen absorption method (true specific gravity is set to 2.2): 23.3 nm) was obtained.

Also with an observation by electron microscope, aggregated colloidal composite particles formed by link between the colloidal silica particles and aluminum phosphate were not confirmed, and the resulting sol was almost colloidal silica particles in SNOWTEX O-40.

### Comparative Example 2

1800 g of pure water was added to 218.4 g (Al₂O₃ content: 45.86 g) of an aqueous solution of sodium aluminate (NA-150 (trade name)) described in Example 1 to obtain 2018.4 g of aqueous solution of sodium aluminate having Al₂O₃ concentration of 2.272% by weight.

119.3 g (H₃PO₄ content: 101.4 g) of 85% aqueous solution of phosphoric acid and 2600 g of pure water were placed in a glass container, and 2018.4 g of the aqueous solution of sodium aluminate was continuously added thereto with stirring by Disper type agitator at 3000 rpm over 30 minutes and continued stirring for 20 minutes. 4618.4 g of a liquid (pH 10.30, electric conductance: 9.88 mS/cm, (Al/PO₄) molar ratio: 0.869, aluminum phosphate concentration: 2.373% by weight) was obtained.

At this stage, the liquid became white to form aluminum phosphate by reaction between phosphate ion and aluminate ion. An observation with electron microscope revealed that the resulting colloidal particles of aluminum phosphate had a particle shape similar to fumed silica and two-dimensional or three-dimensional large aggregated particles were formed by fuming of primary particles of about 10 to 20 nm.

Next, 390 g of 10% aqueous solution of sulfuric acid was added to the liquid with stirring at 3000 rpm over 20 minutes and continued stirring for 30 minutes. 5008.4 g of a liquid (pH 6.05, electric conductance: 14.1 mS/cm, aluminum phosphate concentration: 2.188% by weight) was obtained.

The resulting liquid was matured at 90°C for 2 hours, and thereafter cooled. The liquid had the following physical properties: pH 6.15 and electric conductance: 14.42 mS/cm. An observation with electron microscope revealed that the state of the liquid was almost identical with that after addition of sodium aluminate.

As the resulting colloidal particles of aluminum phosphate had a particle diameter of aggregates of 1 µm or more, they were liable to be separated in the liquid. Therefore, the liquid was slurry not sol. The slurry was filtrated through Nutsche funnel and washed with 14 L of water.

709 g (aluminum phosphate content (in terms of AlPO₄): 109.6 g ) of a wet cake was obtained. 1720 g of pure water was added thereto, and stirred at 3000 rpm for 2 hours with Disper type agitator. 2429 g of a liquid (pH 7.65, electric conductance: 245 µS/cm, aluminum phosphate concentration: 4.512% by weight) was obtained. However, only a part was in a state of sol, and most thereof was precipitated by standing.

Next, the liquid was dispersed for 8 minutes with an ultrasonic homogenizer. The resulting liquid was in a state of sol and the stability thereof was good although a very few precipitates was confirmed.

The aluminum phosphate sol had the following physical properties: pH 7.17, electric conductance: 494 µS/cm, particle diameter measured by dynamic light scattering method: 271 nm, specific surface area measured by nitrogen absorption method: 146 m²/g,and particle diameter measured by nitrogen absorption method (true specific gravity is set to 2.5): 16.4 nm, and observed (Al/PO₄) molar ratio: 1.05.

10% by weight of aluminum phosphate (AlPO₄) obtained by concentrating the sol had the following physical properties: specific gravity: 1.082, pH 7.16, viscosity: 11.7 mPa·s, electric conductance: 800 µS/cm, and particle diameter measured by dynamic light scattering method: 270 nm. Powder X-ray diffraction of the sol dried at 110°C revealed that it was amorphous, and the thermal analysis of the dried sol estimated that the composition of the colloidal particles was AlPO₄·2.0 H₂O.

An observation with electron microscope revealed that the resulting colloidal particles of aluminum phosphate had a shape of aggregated particles formed by fuming of colloidal particles each other, which was different from that of Examples.

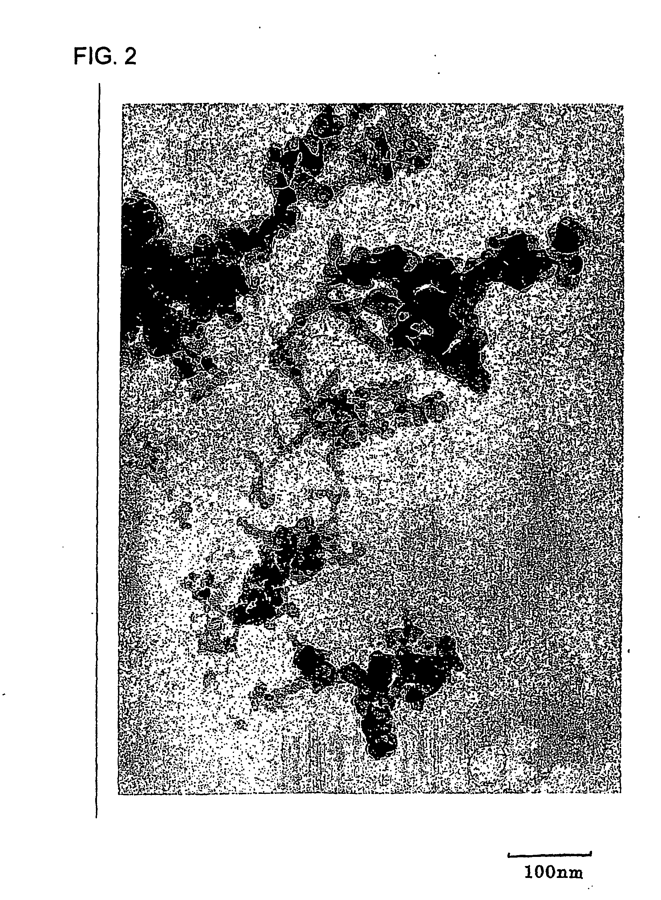

Fig. 2 shows a photograph of the colloidal particles of aluminum phosphate obtained as mentioned above, which was taken with an electron microscope.

### Comparative Example 3

Pure water was added to commercially available water glass JIS No. 3 (SiO₂/Na₂O molar ratio: 3.22, silica concentration: 28.5% by weight) to obtain an aqueous solution of sodium silicate having a silica concentration of 3.0% by weight. The aqueous solution of sodium silicate was passed through a column in which cation exchange resin (Amberlite 120B (trade name)) was filled to obtain an aqueous colloidal solution of active silicate.

Next, 1488 g (SiO₂ content: 32.0 g) of the aqueous colloidal solution of active silicate (silica concentration: 2.15% by weight, pH 3.07) was placed in a glass container, and 59 g (CaO content: 2.02 g) of 10% by weight aqueous solution of calcium nitrate (pH 4.32) was added thereto with stirring at 20°C, and continued stirring for 30 minutes. Added calcium nitrate was 6.30% by weight in terms of CaO based on SiO₂.

On the other hand, 2000 g (SiO₂ content: 810 g) of acid silica sol having a specific surface area diameter (particle diameter measured by nitrogen absorption method) of 21.5 nm (SNOWTEX O-40 (trade name) described in Example 3 was placed another glass container, and 6.0 g of 5% by weight aqueous solution of sodium hydroxide was added thereto with stirring, and continued stirring for 30 minutes to an acid silica sol having pH 4.73 and a silica concentration of 40.4% by weight.

The silica sol had a particle diameter measured by dynamic light scattering method of 35.0 nm. In addition, an observation with electron microscope revealed no aggregation of colloidal silica particles.

The acid silica sol was added to the aqueous colloidal solution of active silicate to which calcium nitrate was added with stirring, and continued stirring for 30 minutes. The resulting mixture liquid (a) had the following physical properties: pH 3.60, electric conductance: 2580 µS/cm, silica concentration: 23.5% by weight, and CaO concentration (based on SiO₂): 0.242% by weight.

Next, 330 g of 1.97% by weight aqueous solution of sodium hydroxide was added to the resulting mixture liquid (a) with stirring over 10 minutes, and further continued stirring for 1 hour. The resulting mixture liquid (b) had the following physical properties: pH 9.22, electric conductance: 3266 µS/cm, and silica concentration: 21.5% by weight.

Then, 1800 g of the mixture liquid (b) was placed in a stainless autoclave, heated at 145°C for 3 hours with stirring, thereafter cooled and 1800 g of contents were taken out. The resulting liquid was a silica sol having clear colloid color. The sol had the following physical properties: silica concentration: 21.5% by weight, specific gravity: 1.141, pH 9.62, electric conductance: 3290 µS/cm, viscosity: 91.7 mPa·s, and particle diameter measured by dynamic light scattering method: 177 nm. An observation with electron microscope revealed that the colloidal silica particles in the resulting silica sol were composed of spherical colloidal silica particles and silica bonding them, and were moniliform colloidal silica particles in which the spherical colloidal silica particles were linked in rows in one plane in moniliform shape in the number of 5 to 30.

1600 g of water and 13 g of 5% by weight aqueous solution of sodium hydroxide were added to 800 g (SiO₂ content: 172 g) of the resulting silica sol, and the resulting mixture was subjected to a desalination and concentration with a plane membrane of ultrafiltration membrane (Ultrafilter manufactured by Advantec Toyo Roshi Kaisha , Ltd., differential molecular weight: 50000) to obtain 662 g of a silica sol. The concentrated sol had the following physical properties: silica concentration: 26.0% by weight, specific gravity: 1.177, pH 10.0, electric conductance: 2160 µS/cm, viscosity: 270 mPa·s, and particle diameter measured by dynamic light scattering method: 177 nm.

Then, 72 g of water was added to 400 g (SiO₂ content: 104 g) of the concentrated sol to obtain a silica sol having a silica concentration of 22% by weight. The silica sol was passed through a column in which cation exchange resin (Amberlite IR-120B was filled to obtain an acid moniliform silica sol. The acid moniliform silica sol had the following physical properties: silica concentration: 22% by weight, specific gravity: 1.143, pH 2.50, electric conductance: 1930 µS/cm, viscosity: 25 mPa·s, and particle diameter measured by dynamic light scattering method: 175 nm. An observation with electron microscope revealed that the acid moniliform silica sol had a shape similar to the alkaline moniliform silica sol.

Evaluation examples and comparative evaluation examples on the coating composition for ink receiving layer and ink jet recording medium having the ink receiving layer according to the second embodiment of the present invention will be described below.

### "Preparation of Aqueous Solution of Polyvinyl Alcohol"

450 g of pure water was charged in a glass container, to which 50 g of polyvinyl alcohol MA-26GP (manufactured by Shin-Etsu Chemical Co., Ltd.) was added. The mixture was heated at 90°C for 1 hour and then cooled to obtain 10% by weight aqueous solution of polyvinyl alcohol.

### Evaluation Example 1

In a glass container, was placed 100 g (total content of silica and aluminum phosphate: 25.17 g) of the composite sol (total concentration of silica and aluminum phosphate: 25.17% by weight, pH 5.98) described in Example 1, to which was added 31.46 g (polyvinyl alcohol content: 3.15 g) of 10% by weight aqueous solution of polyvinyl alcohol with stirring, followed by stirring for 10 minutes to obtain 131.46 g of a coating liquid for ink receiving layer for ink jet recording. The coating composition had a weight ratio of colloidal composite particles to polyvinyl alcohol (weight ratio of colloidal composite particles : polyvinyl alcohol) of 8.0:1.0, total concentration of silica and aluminum phosphate of 19.15% by weight, polyvinyl alcohol concentration of 2.40% by weight, and the total concentration of the both (total concentration of solid content) of 21.54% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 26.9 µm. The coated film had a slightly transparent milk white color and was almost free from cracks, and had good smoothness and good brilliance.

### Evaluation Example 2

In a glass container, was placed 100 g (total content of silica and aluminum phosphate: 25.17 g) of the composite sol (total concentration of silica and aluminum phosphate: 25.17% by weight, pH 5.98) described in Example 1, to which was added 4.34 g (Al₂O₃ content: 1.02 g) of an aqueous solution of basic aluminum chloride (Al₂O₃: 23.4% by weight) described in Example 7 with stirring, followed by stirring for 20 minutes. The ratio of basic aluminum chloride to colloidal composite particle in the sol means the weight ratio of alumina (Al₂O₃) weight/(total weight of silica and aluminum phosphate) wherein alumina (Al₂O₃) weight is a weight of aluminum component derived from basic aluminum chloride, and total weight of silica and aluminum phosphate is a weight of colloidal composite particles in the composite sol being raw material, and was 4.0% by weight. At this stage, aluminum polycations in the aqueous solution of basic aluminum chloride were adsorbed on the surface of the colloidal composite particles, and further the polycations were polymerized to form positively charged fine alumina sol, thus positively charged composite sol was formed by inversion of charge on the colloidal composite particles.

31.75 g (polyvinyl content: 3.175 g) of 10% by weight aqueous solution of polyvinyl alcohol was added to the sol with stirring, followed by stirring for 10 minutes to obtain 136.09 g of a coating liquid for ink receiving layer for ink jet recording. The coating composition had a weight ratio of positively charged colloidal composite particles to polyvinyl alcohol of 8.0:1.0, total concentration of silica and aluminum phosphate of 18.50% by weight, polyvinyl alcohol concentration of 2.33% by weight, and the total concentration of the both (total concentration of solid content) of 21.58% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 29.4 µm. The coated film had a slightly transparent milk white color and was almost free from cracks, and had good smoothness and good brilliance.

### Evaluation Example 3

In a glass container, was placed 100 g (total content of silica and aluminum phosphate: 25.17 g) of the composite sol (total concentration of silica and aluminum phosphate: 25.17% by weight, pH 5.98) described in Example 1, to which was added 31.46 g (polyvinyl alcohol content: 3.15 g) of 10% by weight aqueous solution of polyvinyl alcohol with stirring, followed by stirring for 10 minutes, and added 1.21 g of a cationic polymer, Sharoll DC-902P (trade name) (manufactured by Dai-ichi Kogyo Seiyaku Co., Ltd., pH 3.60, solid content: 52% by weight), followed by stirring for 10 minutes, and further added a minute amount of a defoaming agent, followed by stirring for 10 minutes to obtain 132.67 g of a coating liquid for ink receiving layer for ink jet recording. Addition of the cationic polymer to the liquid occurs inversion of charge on the colloidal composite particles to form positively charged colloidal composite particles.

The coating composition had a weight ratio of colloidal composite particles to polyvinyl alcohol of 8.0:1.0, total concentration of silica and aluminum phosphate of 18.97% by weight, polyvinyl alcohol concentration of 2.37% by weight, and the total concentration of the both (total concentration of solid content) of 21.34% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 26.3 µm. The coated film had a slightly transparent milk white color and was almost free from cracks, and had good smoothness and good brilliance.

### Evaluation Example 4

After coating the coating liquid produced in Evaluation Example 1 on a back of commercially available ink jet photo gloss paper (A4 size) using a bar coater to a liquid film thickness of 101 µm, it was immediately dried at 110°C for 5 minutes using a hot-air drier to prepare a sheet for ink jet recording.

The thickness of the ink receiving layer (coated film) of the prepared sheet after drying was 19.7 µm. The coated film was almost free from cracks, and had good smoothness and good brilliance.

### Evaluation Example 5

In a glass container, was placed 100 g (total content of silica and aluminum phosphate: 25.2 g) of the composite sol (total concentration of silica and aluminum phosphate: 25.20% by weight, pH 4.76) described in Example 7, to which was added 31.45 g (polyvinyl alcohol content: 3.15 g) of 10% by weight aqueous solution of polyvinyl alcohol with stirring, followed by stirring for 10 minutes to obtain 131.5 g of a coating liquid for ink receiving layer for ink jet recording. The coating composition had a weight ratio of colloidal composite particles to polyvinyl alcohol of 8.0:1.0, total concentration of silica and aluminum phosphate of 19.16% by weight, polyvinyl alcohol concentration of 2.40% by weight, and the total concentration of the both (total concentration of solid content) of 21.56% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 24.8 µm. The coated film had a slightly transparent milk white color and was almost free from cracks, and had good smoothness and good brilliance.

### Evaluation Example 6

After coating the coating liquid produced in Evaluation Example 5 on a back of commercially available ink jet photo gloss paper (A4 size) using a bar coater to a liquid film thickness of 101 µm, it was immediately dried at 110°C for 5 minutes using a hot-air drier to prepare a sheet for ink jet recording.

The thickness of the ink receiving layer (coated film) of the prepared sheet after drying was 19.8 µm. The coated film was almost free from cracks, and had good smoothness and good brilliance.

### Evaluation Example 7

In a glass container, was placed 100 g (total content of silica and aluminum phosphate: 25.2 g) of the composite sol (total concentration of silica and aluminum phosphate: 25.20% by weight, pH 4.76) described in Example 7, to which was added 31.5 g (polyvinyl alcohol content: 3.15 g) of 10% by weight aqueous solution of polyvinyl alcohol with stirring, followed by stirring for 10 minutes, and added 2.4 g of a cationic polymer, Sharoll DC-902P (trade name) described above, followed by stirring for 10 minutes, and further added a minute amount of a defoaming agent, followed by stirring for 10 minutes to obtain 133.9 g of a coating liquid for ink receiving layer for ink jet recording. Addition of the cationic polymer to the liquid occurs inversion of charge on the colloidal composite particles to form positively charged colloidal composite particles.

The coating composition had a weight ratio of colloidal composite particles to polyvinyl alcohol of 8.0:1.0, total concentration of silica and aluminum phosphate of 18.82% by weight, polyvinyl alcohol concentration of 2.35% by weight, and the total concentration of the both (total concentration of solid content) of 21.17% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 24.2 µm. The coated film had a slightly transparent milk white color and was almost free from cracks, and had good smoothness and good brilliance.

### Evaluation Example 8

In a glass container, was placed 100 g (total content of silica and aluminum phosphate: 26.4 g) of the composite sol (total concentration of silica and aluminum phosphate: 26.40% by weight, pH 7.91) described in Example 5, to which was added 20.1 g (resin emulsion content: 8.6 g) of acrylic resin emulsion, Movinyl 735 (Clariant Polymer Co., Ltd., solid content: 43% by weight) with stirring, followed by stirring for 10 minutes to obtain 120.1 g of a coating liquid for ink receiving layer for ink jet recording. The coating composition had a weight ratio of colloidal composite particles to resin emulsion of 3.0:1.0, total concentration of silica and aluminum phosphate of 21.98% by weight, resin emulsion concentration of 7.16% by weight, and the total concentration of the both (total concentration of solid content) of 29.14% by weight.

After coating the coating liquid on a back of commercially available ink jet photo gloss paper (A4 size) using a bar coater to a liquid film thickness of 101 µm, it was immediately dried at 110°C for 5 minutes using a hot-air drier to prepare a sheet for ink jet recording.

The thickness of the ink receiving layer (coated film) of the prepared sheet after drying was 25.2 µm. The coated film was almost free from cracks, and had good smoothness and good brilliance.

### Evaluation Example 9

40.2 g (Al₂O₃ content: 4.71 g) of an aqueous solution of basic aluminum chloride (Al₂O₃: 12.7% by weight) described in Example 7 was added to 754 g (total content of silica and aluminum phosphate: 188.5 g) of the composite sol (total concentration of silica and aluminum phosphate: 25.20% by weight, pH 4.76) described in Example 7 with stirring at 4000 rpm by Disper type agitator, followed by stirring for 1 hour to obtain positively charged composite sol.

The sol had a specific gravity of 1.163, pH 3.70, a viscosity of 46.3 mPa·s, an electric conductance of 6.70 mS/cm, and a total concentration of silica, aluminum phosphate and alumina of 24.33% by weight. The ratio of basic aluminum chloride to colloidal composite particle in the sol means the weight ratio of alumina (Al₂O₃) weight/(total weight of silica and aluminum phosphate) wherein alumina (Al₂O₃) weight is a weight of aluminum component derived from basic aluminum chloride, and total weight of silica and aluminum phosphate is a weight of colloidal composite particles in the composite sol being raw material, and was 2.5% by weight, and a particle diameter measured by dynamic light scattering method of 172 nm. The sol had a thixo characteristics like alumina sol.

30.38 g of 10% by weight aqueous solution of polyvinyl alcohol was added to 100 g (total content of silica, aluminum phosphate and alumina: 24.33 g) of the positively charged composite sol with stirring, followed by stirring for 10 minutes to obtain 130.38 g of a coating liquid for ink receiving layer for ink jet recording. The coating composition had a weight ratio of positively charged colloidal composite particles to polyvinyl alcohol of 8.0:1.0 in ratio of weight of (positively charged colloidal composite particles + Al₂O₃) to weight of polyvinyl alcohol, positively charged colloidal composite particle concentration of 18.66% by weight, polyvinyl alcohol concentration of 2.33% by weight, and the total concentration of the both (total concentration of solid content) of 20.99% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 24.3 µm. The coated film had a slightly transparent milk white color and was almost free from cracks, and had good smoothness and good brilliance.

### Evaluation Example 10

In a glass container, was placed 100 g (total content of silica and aluminum phosphate: 20.694 g) of the composite sol (total concentration of silica and aluminum phosphate: 20.694% by weight, pH 5.29) described in Example 9, to which was added 25.9 g (polyvinyl alcohol content: 2.59 g) of 10% by weight aqueous solution of polyvinyl alcohol with stirring, followed by stirring for 10 minutes to obtain 125.9 g of a coating liquid for ink receiving layer for ink jet recording. The coating composition had a weight ratio of colloidal composite particles to polyvinyl alcohol of 8.0:1.0, total concentration of silica and aluminum phosphate of 16.44% by weight, polyvinyl alcohol concentration of 2.06% by weight, and the total concentration of the both (total concentration of solid content) of 18.50% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 23.2 µm. The coated film had a slightly transparent milk white color and was almost free from cracks, and had good smoothness and good brilliance.

### Evaluation Example 11

In a glass container, was placed 100 g (total content of silica and aluminum phosphate: 20.694 g) of the composite sol (total concentration of silica and aluminum phosphate: 20.694% by weight, pH 5.29) described in Example 9, to which was added 25.9 g (polyvinyl alcohol content: 2.59 g) of 10% by weight aqueous solution of polyvinyl alcohol with stirring, followed by stirring for 10 minutes, and added 2.0 g of a cationic polymer, Sharoll DC-902P (trade name) described above, followed by stirring for 10 minutes, and further added a minute amount of a defoaming agent, followed by stirring for 10 minutes to obtain 127.9 g of a coating liquid for ink receiving layer for ink jet recording.

The coating composition had a weight ratio of colloidal composite particles to polyvinyl alcohol of 8.0:1.0, total concentration of silica and aluminum phosphate of 16.18% by weight, polyvinyl alcohol concentration of 2.03% by weight, and the total concentration of the both (total concentration of solid content) of 18.21 % by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 22.8 µm. The coated film had a slightly transparent milk white color and was almost free from cracks, and had good smoothness and good brilliance.

### Evaluation Example 12

In a glass container, was placed 100 g (total content of silica and aluminum phosphate: 19.28 g) of the composite sol (total concentration of silica and aluminum phosphate: 19.28% by weight, pH 5.60) described in Example 10, to which was added 24.1 g (polyvinyl alcohol content: 2.41 g) of 10% by weight aqueous solution of polyvinyl alcohol with stirring, followed by stirring for 10 minutes to obtain 124.1 g of a coating liquid for ink receiving layer for ink jet recording. The coating composition had a weight ratio of colloidal composite particles to polyvinyl alcohol of 8.0:1.0, total concentration of silica and aluminum phosphate of 15.54% by weight, polyvinyl alcohol concentration of 1.94% by weight, and the total concentration of the both (total concentration of solid content) of 17.48% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 20.8 µm. The coated film had a slightly transparent milk white color and was almost free from cracks, and had good smoothness and good brilliance.

### Evaluation Example 13

In a glass container, was placed 100 g (total content of silica and aluminum phosphate: 19.28 g) of the composite sol (total concentration of silica and aluminum phosphate: 19.28% by weight, pH 5.60) described in Example 10, to which was added 24.1 g (polyvinyl alcohol content: 2.41 g) of 10% by weight aqueous solution of polyvinyl alcohol with stirring, followed by stirring for 10 minutes, and added 1.1 g of a cationic polymer, Sharoll DC-902P (trade name) described above, followed by stirring for 10 minutes, and further added a minute amount of a defoaming agent, followed by stirring for 10 minutes to obtain 125.2 g of a coating liquid for ink receiving layer for ink jet recording.

The coating composition had a weight ratio of colloidal composite particles to polyvinyl alcohol of 8.0:1.0, total concentration of silica and aluminum phosphate of 15.40% by weight, polyvinyl alcohol concentration of 1.93% by weight, and the total concentration of the both (total concentration of solid content) of 17.33% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 20.5 µm. The coated film had a slightly transparent milk white color and was almost free from cracks, and had good smoothness and good brilliance.

### Evaluation Example 14

In a glass container, was placed 100 g (total content of silica and aluminum phosphate: 30.49 g) of the composite sol (total concentration of silica and aluminum phosphate: 30.49% by weight, pH 5.40) described in Example 11, to which was added 38.1 g (polyvinyl alcohol content: 3.81 g) of 10% by weight aqueous solution of polyvinyl alcohol with stirring, followed by stirring for 10 minutes to obtain 138.1 g of a coating liquid for ink receiving layer for ink jet recording. The coating composition had a weight ratio of colloidal composite particles to polyvinyl alcohol of 8.0:1.0, total concentration of silica and aluminum phosphate of 22.08% by weight, polyvinyl alcohol concentration of 2.76% by weight, and the total concentration of the both (total concentration of solid content) of 24.84% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 26.2 µm. The coated film had a slightly transparent milk white color and was almost free from cracks, and had good smoothness and good brilliance.

### Evaluation Example 15

In a glass container, was placed 100 g (total content of silica and aluminum phosphate: 30.49 g) of the composite sol (total concentration of silica and aluminum phosphate: 30.49% by weight, pH 5.40) described in Example 11, to which was added 20.3 g (polyvinyl alcohol content: 2.03 g) of 10% by weight aqueous solution of polyvinyl alcohol with stirring, followed by stirring for 10 minutes, and added 2.4 g of a cationic polymer, Sharoll DC-902P (trade name) described above, followed by stirring for 10 minutes, and further added a minute amount of a defoaming agent, followed by stirring for 10 minutes to obtain 122.7 g of a coating liquid for ink receiving layer for ink jet recording.

The coating composition had a weight ratio of colloidal composite particles to polyvinyl alcohol of 15.0:1.0, total concentration of silica and aluminum phosphate of 24.85% by weight, polyvinyl alcohol concentration of 1.65% by weight, and the total concentration of the both (total concentration of solid content) of 26.50% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 26.1 µm. The coated film had a slightly transparent milk white color and was almost free from cracks, and had good smoothness and good brilliance.

### Evaluation Example 16

In a glass container, was placed 100 g (total content of silica and aluminum phosphate: 30.49 g) of the composite sol (total concentration of silica and aluminum phosphate: 30.49% by weight, pH 5.40) described in Example 11, to which was added 20.3 g (polyvinyl alcohol content: 2.03 g) of 10% by weight aqueous solution of polyvinyl alcohol with stirring, followed by stirring for 10 minutes, and added 2.4 g of a cationic polymer, Sharoll DC-902P (trade name) described above, followed by stirring for 10 minutes. Further, 6.0 g of 28% aqueous solution of ammonia was added thereto to control pH to 10.5 and then a minute amount of a defoaming agent was added followed by stirring for 10 minutes to obtain 128.7 g of a coating liquid for ink receiving layer for ink jet recording.

The coating composition had a weight ratio of colloidal composite particles to polyvinyl alcohol of 15.0:1.0, total concentration of silica and aluminum phosphate of 23.69% by weight, polyvinyl alcohol concentration of 1.58% by weight, and the total concentration of the both (total concentration of solid content) of 25.27% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 25.9 µm. The coated film had a slightly transparent milk white color and was almost free from cracks, and had good smoothness and good brilliance.

### Evaluation Example 17

In a glass container, was placed 100 g (total content of silica and aluminum phosphate: 33.66 g) of the composite sol (total concentration of silica and aluminum phosphate: 33.66% by weight, pH 4.51) described in Example 12, to which was added 42.1 g (polyvinyl alcohol content: 4.21 g) of 10% by weight aqueous solution of polyvinyl alcohol with stirring, followed by stirring for 10 minutes to obtain 142.1 g of a coating liquid for ink receiving layer for ink jet recording. The coating composition had a weight ratio of colloidal composite particles to polyvinyl alcohol of 8.0:1.0, total concentration of silica and aluminum phosphate of 23.69% by weight, polyvinyl alcohol concentration of 2.96% by weight, and the total concentration of the both (total concentration of solid content) of 26.65% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 26.5 µm. The coated film had a slightly transparent milk white color and was almost free from cracks, and had good smoothness and good brilliance.

### Evaluation Example 18

In a glass container, was placed 100 g (total content of silica and aluminum phosphate: 33.66 g) of the composite sol (total concentration of silica and aluminum phosphate: 33.66% by weight, pH 4.51) described in Example 12, to which was added 42.1 g (polyvinyl alcohol content: 4.21 g) of 10% by weight aqueous solution of polyvinyl alcohol with stirring, followed by stirring for 10 minutes, and added 2.6 g of a cationic polymer, Sharoll DC-902P (trade name) described above, followed by stirring for 10 minutes, and further added a minute amount of a defoaming agent, followed by stirring for 10 minutes to obtain 144.7 g of a coating liquid for ink receiving layer for ink jet recording.

The coating composition had a weight ratio of colloidal composite particles to polyvinyl alcohol of 8.0:1.0, total concentration of silica and aluminum phosphate of 23.26% by weight, polyvinyl alcohol concentration of 2.91 % by weight, and the total concentration of the both (total concentration of solid content) of 26.17% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 26.0 µm. The coated film had a slightly transparent milk white color and was almost free from cracks, and had good smoothness and good brilliance.

### Evaluation Example 19

In a glass container, was placed 100 g (total content of silica and aluminum phosphate: 33.66 g) of the composite sol (total concentration of silica and aluminum phosphate: 33.66% by weight, pH 4.51) described in Example 12, to which was added 11.2 g (polyvinyl alcohol content: 1.12 g) of 10% by weight aqueous solution of polyvinyl alcohol with stirring, followed by stirring for 10 minutes, and added 2.6 g of a cationic polymer, Sharoll DC-902P (trade name) described above, followed by stirring for 10 minutes, and further added a minute amount of a defoaming agent, followed by stirring for 10 minutes to obtain 113.8 g of a coating liquid for ink receiving layer for ink jet recording.

The coating composition had a weight ratio of colloidal composite particles to polyvinyl alcohol of 30.0:1.0, total concentration of silica and aluminum phosphate of 29.58% by weight, polyvinyl alcohol concentration of 0.98% by weight, and the total concentration of the both (total concentration of solid content) of 30.56% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 26.2 µm. The coated film had a milk white color and was almost free from cracks, and had good smoothness and good brilliance.

### Evaluation Example 20

In a glass container, was placed 60 g (total content of silica and aluminum phosphate: 12.42 g) of the composite sol (total concentration of silica and aluminum phosphate: 20.694% by weight, pH 5.29) described in Example 9, to which was added 40.7 g (total content of silica and aluminum phosphate: 12.41 g) of the composite sol (total concentration of silica and aluminum phosphate: 30.49% by weight, pH 5.40) described in Example 11, followed by stirring for 10 minutes, and 31.0 g (polyvinyl alcohol content: 3.10 g) of 10% by weight aqueous solution of polyvinyl alcohol with stirring, followed by stirring for 10 minutes, and added 2.4 g of a cationic polymer, Sharoll DC-902P (trade name) described above, followed by stirring for 10 minutes, and further added a minute amount of a defoaming agent, followed by stirring for 10 minutes to obtain 134.1 g of a coating liquid for ink receiving layer for ink jet recording.

The coating composition had a weight ratio of colloidal composite particles to polyvinyl alcohol of 8.0:1.0, total concentration of silica and aluminum phosphate of 18.52% by weight, polyvinyl alcohol concentration of 2.31% by weight, and the total concentration of the both (total concentration of solid content) of 20.83% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 23.5 µm. The coated film had a slightly transparent milk white color and was almost free from cracks, and had good smoothness and good brilliance.

### Comparative Evaluation Example 1

In a glass container, was placed 61.58 g (silica content: 25.0 g) of spherical silica sol (SNOWTEX O-40 (trade name) having a specific surface area diameter (particle diameter measured by nitrogen absorption method) of 21.5 nm described in Example 3, to which was added 38.42 g of pure water to give a silica concentration of 25.0% by weight. Thereafter, 31.26 g (polyvinyl alcohol content: 3.126 g) of 10% by weight aqueous solution of polyvinyl alcohol was added with stirring and stirred for 10 minutes to obtain 131.26 g of a coating liquid for ink receiving layers for ink jet recording. The coating composition had a weight ratio of colloidal composite particles to polyvinyl alcohol of 8.0:1.0, total concentration of silica and aluminum phosphate of 19.05% by weight, polyvinyl alcohol concentration of 2.38% by weight, and the total concentration of the both (total concentration of solid content) of 21.43% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 22.5 µm. The coated film had transparency and a light milk white color, and had many cracks, and was poor in smoothness and brilliance.

### Comparative Evaluation Example 2

After coating the coating liquid produced in Comparative Evaluation Example 1 on a back of commercially available ink jet photo gloss paper (A4 size) using a bar coater to a liquid film thickness of 101 µm, it was immediately dried at 110°C for 5 minutes using a hot-air drier to prepare a sheet for ink jet recording.

The thickness of the ink receiving layer (coated film) of the prepared sheet after drying was 19.3 µm. The coated film a few cracks, and was poor in smoothness and brilliance.

### Comparative Evaluation Example 3

In a glass container, was placed 100.00 g (silica content: 22.0 g) of acid moniliform silica sol described in Comparative Example 3, to which was added 27.50 g (polyvinyl alcohol content: 2.75 g) of 10% by weight aqueous solution of polyvinyl alcohol was added with stirring and stirred for 10 minutes to obtain 127.50 g of a coating liquid for ink receiving layers for ink jet recording. The coating composition had a weight ratio of colloidal composite particles to polyvinyl alcohol of 8.0:1.0, total concentration of silica and aluminum phosphate of 17.25% by weight, polyvinyl alcohol concentration of 2.16% by weight, and the total concentration of the both (total concentration of solid content) of 19.41% by weight.

After coating the coating liquid on a surface-treated commercially available PET film (A4 size) using a bar coater to a liquid film thickness of 137 µm, it was immediately dried at 110°C for 5 minutes using a hot-air drier to prepare a sheet for ink jet recording.

The thickness of the ink receiving layer (coated film) of the prepared sheet after drying was 20.2 µm. The coated film had transparency and a light milk white color, and had little cracks and good smoothness, but was poor a little in brilliance.

### Comparative Evaluation Example 4

After coating the coating liquid produced in Comparative Evaluation Example 3 on a back of commercially available ink jet photo gloss paper (A4 size) using a bar coater to a liquid film thickness of 101 µm, it was immediately dried at 110°C for 5 minutes using a hot-air drier to prepare a sheet for ink jet recording.

The thickness of the ink receiving layer (coated film) of the prepared sheet after drying was 18.0 µm. The coated film had transparency and a light milk white color, and had little cracks and good smoothness, but was poor a little in brilliance.

### Test Example 1

Standard color image was printed on each of the ink jet recording media prepared in the Evaluation Examples 1 to 20 and the Comparative Evaluation Examples 1 to 4 (ink jet recording paper or sheet) or a back of commercially available glossy paper for ink jet photograph (A4 size) (Comparative Evaluation Example 5: Blank) using an ink jet printer (Deskjet 970Cxi (type applicable for dye-based ink) manufactured by Hewlett-Packard Development Company, L.P.) and ink jet recording properties such as ink absorptivity, absorption speed, sharpness of print, color, brilliance and the like were determined. The results are shown in Table 1. It was confirmed that ink jet recording papers and sheets in which the composite sol of the present invention was used had excellent ink jet recording properties.

**Table 1**

| Recording medium | Substrate | Ink jet recording properties* | | | | |
|---|---|---|---|---|---|---|
| | | A | B | C | D | E |
| Evaluation Example 1 | Sheet | ○ | ○ | ○ | ○ | ○ |
| Evaluation Example 2 | Sheet | ○ | ○ | ○ | ⓞ | ⓞ |
| Evaluation Example 3 | Sheet | ○ | ○ | ○ | ○ | ○ |
| Evaluation Example 4 | Paper | ⓞ | ⓞ | ⓞ | ○ | ○ |
| Evaluation Example 5 | Sheet | ○ | ○ | ○ | ○ | ○ |
| Evaluation Example 6 | Paper | ⓞ | ⓞ | ○ | ⓞ | ○ |
| Evaluation Example 7 | Sheet | ○ | ○ | ○ | ⓞ | ⓞ |
| Evaluation Example 8 | Paper | ○ | ○ | ○ | ○ | ⓞ |
| Evaluation Example 9 | Sheet | ○ | ○ | ○ | ○ | ○ |
| Evaluation Example 10 | Sheet | ○ | ○ | ○ | ○ | ○ |
| Evaluation Example 11 | Sheet | ○ | ○ | ○ | ⓞ | ⓞ |
| Evaluation Example 12 | Sheet | ⓞ | ○ | ○ | ○ | ○ |
| Evaluation Example 13 | Sheet | ⓞ | ○ | ○ | ⓞ | ⓞ |
| Evaluation Example 14 | Sheet | ⓞ | ⓞ | ○ | ○ | ○ |
| Evaluation Example 15 | Sheet | ⓞ | ⓞ | ⓞ | ○ | ⓞ |
| Evaluation Example 16 | Sheet | ⓞ | ⓞ | ⓞ | ○ | ⓞ |
| Evaluation Example 17 | Sheet | ⓞ | ⓞ | ○ | Δ | ○ |
| Evaluation Example 18 | Sheet | ⓞ | ⓞ | ⓞ | Δ | ⓞ |
| Evaluation Example 19 | Sheet | ⓞ | ⓞ | ⓞ | Δ | ⓞ |
| Evaluation Example 20 | Sheet | ⓞ | ⓞ | ○ | ⓞ | ⓞ |
| Comparative Evaluation Example 1 | Sheet | × | × | × | × | Δ |
| Comparative Evaluation Example 2 | Paper | Δ | Δ | Δ | Δ | × |
| Comparative Evaluation Example 3 | Sheet | ○ | ○ | Δ | Δ | Δ |
| Comparative Evaluation Example 4 | Paper | ○ | ○ | Δ | Δ | Δ |
| Comparative Evaluation Example 5 | Paper | Δ | Δ | Δ | × | × |

| | | | | | | |
|---|---|---|---|---|---|---|
| * Ink jet recording properties are as follows: A: ink absorptivity, B: absorption speed, C: sharpness of print, D: color, E: brilliance | | | | | | |

### Test Example 2

Standard color image was printed on each of the ink jet recording media prepared in the Evaluation Examples 1, 4 to 6, 8 and 10 to 20 and the Comparative Evaluation Examples 1 to 4 (ink jet recording paper or sheet) or a back of commercially available glossy paper for ink jet photograph (A4 size) (Comparative Evaluation Example 5) using an ink jet printer (MC-2000 (type applicable for pigment-based ink) manufactured by Seiko Epson Corporation) and ink jet recording properties such as ink absorptivity, absorption speed, sharpness of print, color, brilliance and the like were determined. The results are shown in Table 2. It was confirmed that ink jet recording papers and sheets in which the composite sol of the present invention was used had very excellent ink jet recording properties. In particular, it was confirmed that ink jet recording properties for pigment-based ink were excellent when the composite sol having a large primary particle diameter was used.

**Table 2**

| Recording medium | Substrate | Ink jet recording properties* | | | | |
|---|---|---|---|---|---|---|
| | | A | B | C | D | E |
| Evaluation Example 1 | Sheet | ○ | ○ | ○ | ○ | ○ |
| Evaluation Example 4 | Paper | ⓞ | ⓞ | ○ | ⓞ | ○ |
| Evaluation Example 5 | Sheet | ○ | Δ | Δ | ○ | ○ |
| Evaluation Example 6 | Paper | ○ | ○ | ○ | ⓞ | ○ |
| Evaluation Example 8 | Paper | ⓞ | ○ | ○ | ○ | ⓞ |
| Evaluation Example 10 | Sheet | ○ | Δ | Δ | ○ | ○ |
| Evaluation Example 11 | Sheet | ○ | ○ | ○ | ○ | ○ |
| Evaluation Example 12 | Sheet | ○ | ○ | ○ | ○ | ○ |
| Evaluation Example 13 | Sheet | ○ | ○ | ○ | ⓞ | ○ |
| Evaluation Example 14 | Sheet | ⓞ | ⓞ | ○ | ○ | ○ |
| Evaluation Example 15 | Sheet | ⓞ | ⓞ | ○ | ⓞ | ⓞ |
| Evaluation Example 16 | Sheet | ⓞ | ⓞ | ○ | ⓞ | ⓞ |
| Evaluation Example 17 | Sheet | ⓞ | ⓞ | ⓞ | ⓞ | ⓞ |
| Evaluation Example 18 | Sheet | ⓞ | ⓞ | ⓞ | ⓞ | ⓞ |
| Evaluation Example 19 | Sheet | ⓞ | ⓞ | ⓞ | ⓞ | ⓞ |
| Evaluation Example 20 | Sheet | ⓞ | ⓞ | ○ | ⓞ | ⓞ |
| Comparative Evaluation Example 1 | Sheet | × | × | × | × | × |
| Comparative Evaluation Example 2 | Paper | × | × | × | × | × |
| Comparative Evaluation Example 3 | Sheet | Δ | Δ | Δ | × | × |
| Comparative Evaluation Example 4 | Paper | ○ | ○ | Δ | Δ | Δ |
| Comparative Evaluation Example 5 | Paper | Δ | Δ | Δ | × | × |

| | | | | | | |
|---|---|---|---|---|---|---|
| * Ink jet recording properties are as follows: A: ink absorptivity, B: absorption speed, C: sharpness of print, D: color, E: brilliance | | | | | | |

### Industrial Applicability

The composite sol of the first embodiment according to the present invention brings about improvements in various applications.

Examples of components which may be used together with the composite sol of the first embodiment according to the present invention include several silica sols, aqueous alkali metal silicate solution, partial hydrolyzed liquid of alkyl silicates, alumina sol, other metal oxide sols, water-soluble polymers such as polyvinyl alcohol, hydroxyethylcellulose and gelatin, water-soluble resins such as melamine resin and urea resin, resin emulsions such as acrylic emulsion, tackifiers such as bentonite and sodium alginate, organic solvent dissolved resin solutions such as acrylic resin, organic solvents such as ethylene glycol, methyl alcohol and N,N-dimethylformamide (DMF), partial hydrolyzed liquid of silane coupling agent, surfactants, several acids, several alkalins, refractory powder, metal powder, pigments, paints and the like.

When the composite sol of the first embodiment according to the present invention is mixed with various materials for coating compositions which have heretofore been used, organic material-based coating compositions, inorganic material-based coating compositions, inorganic coating compositions, heat-resistant coating compositions, anti-corrosive coating compositions, inorganic-organic composite coating compositions and the like can be prepared. Dry film formed by coating a coating composition containing the composite sol of the first embodiment according to the present invention has few pin holes and is almost free from cracks. The coated film has smoothness and is soft so as to able to absorb a shock as applied thereto. In addition, the coated films is excellent in adhesiveness to the substrate, the water retention characteristics and antistatic capacity. Therefore, coating compositions containing the composite sol of the first embodiment according to the present invention can be used as composition for antistatic coating by back-coating on resin coated paper, synthetic paper or the like which is used for several films, photographic paper, paper for ink jet or the like.

In particular, the conventional silica sol was poor in stability at neutral region, and therefore was not appropriate for using it alone or in admixture with several components at neutral region. On the contrary, the composite sol of the first embodiment according to the present invention are stable at neural region and therefore has characteristics to be possible to be used for various applications by mixing with several components at neutral region.

Further, the baked coating film formed from an inorganic coating composition containing the composite sol of the first embodiment according to the present invention has good heat-resistance. The coating compositions containing the composite sol of the first embodiment according to the present invention may be applied to the surfaces of various substrates, for example, glass, ceramics, metals, plastics, wood materials and paper.

As the sol contains aluminum phosphate, it can be used as corrosion inhibitor by using it alone or in admixture with other phosphate or the like. When used in combination with resin emulsions such as acrylic base, polyester base and polyolefin base ones for use in anticorrosive coating compositions for zinc-plated steel plates, the composite sol of the first embodiment according to the present invention can increase their anti-corrosiveness and can be used as anticorrosive coating composition of non-chromate type.

In particular, the composite sol of the first embodiment according to the present invention has good film-forming property and its dried product has porosity, so that it is suitable for ink receiving layers of recording paper or recording sheet for printing such as ink jet. In this use, the composite sol is added to water-soluble polymers such as polyvinyl alcohol, water-soluble resins or resin emulsion and the colloidal silica particles of the composite sol serves as a microfiller As the resin emulsion, it may be possible to use emulsions of acrylic base polymers, urethane base polymers, olefin base polymers, vinylidene chloride base polymers, epoxy base polymers, amide base polymers and modified products or copolymers thereof.

Since the composite sol of the first embodiment of the present invention has connecting property and porosity, it is excellent as a carrier for catalysts and a binder for catalysts. In particular, it is suitable for a carrier for fluidized bed catalysts and a binder for catalysts for use in automobiles. Particularly, the sol in which whole surface of colloidal silica particles are coated and bonded with aluminum phosphate has only aluminum phosphate on its surface after baking, so that it can be also used as synthetic catalyst.

The composite sol of the first embodiment according to the present invention may be used also as a tackifier or a gelling agent.

The composite sol of the first embodiment according to the present invention has a large particle diameter by the dynamic light scattering method and also has high adhesion and connecting property, so that it is effective as an anti-slip agent for corrugated boards and films.

The composite sol of the first embodiment according to the present invention may be impregnated in felt-like materials such as ordinary glass fibers, ceramic fibers, and other inorganic fibers. Further, these short fibers and the composite sol of the first embodiment of the present invention may be mixed with each other. When the felt-like materials impregnated with the composite sol of the first embodiment of the present invention is dried, felt-like materials having high strength can be obtained. Furthermore, when a mixture of the above short fibers and the composite sol of the first embodiment according to the present invention is molded into sheets, mats, or other shapes and then dried, sheets, mats, molded articles and the like having high strengths can be also obtained. On the surface of the felts, sheets, mats, molded articles and the like thus obtained, there will occur no dusting which was seen when the conventional silica sol is used similarly. Therefore, it revealed that the colloidal composite particles in the composite sol of the first embodiment of the present invention used as a binding agent for inorganic fibers and the like will not migrate from the inside to the surface of inorganic fiber molded article upon drying. The dried molded articles are provided as improvements for use in applications to heat-resistant heat insulating materials and in other applications.

The composite sol of the first embodiment according to the present invention may also be used also as a surface-treating agent for substrates having a porous texture. For example, when applied to the surface of hardened article such as concrete, mortar, cement, gypsum, and clay, the composite sol is impregnated into from the surface to the inside of the article, and after being dried, it gives an improved surface layer on the article. The composite sol of the first embodiment according to the present invention may also be used as a surface-treating agent for natural fibers and synthetic fibers and fiber products thereof, paper and wood materials. In addition, it may be used as a sealant for castings.

The composite sol of the first embodiment according to the present invention is excellent in dispersion properties in resins or rubbers, so that it may also be used as a reinforcing agent or the like by adding to several resins or rubbers in a shape of organic solvent gel or dried powder obtained by drying it. In particular, it is effective as a reinforcing agent for SBR which is used for tires of automobiles.

The composite sol of the first embodiment according to the present invention exhibits high stability and has the property of finally, irreversibly converting into gel of silica and aluminum phosphate by removal of the medium. Since the colloidal composite particles constituting the composite sol have aggregated particles as described above, when the sol is gelled or after it is hardened, they exhibit unique properties derived from the sol. From these it can be readily understood that the composite sol of the first embodiment according to the present invention is useful in various applications other than the above-described ones.

Particularly in an application for ink jet recording medium among the above-mentioned various application, the coating composition for ink receiving layer of the second embodiment according to the present invention containing the composite sol of the first embodiment according to the present invention and the aqueous resin is used to form an ink receiving layer on paper or plastic film or sheet, and to provide an ink jet recording medium that has high ink absorptivity, high ink absorption speed, sharpness of print, and good color and brilliance.

The pH of the composite sol of the first embodiment according to the present invention can be easily controlled by adding an acid or base thereto, and the sol can be used in an arbitrary ratio with several aqueous resin. In addition, other silica sol may be arbitrarily used by mixing therewith.

The composite sol of the first embodiment according to the present invention is negatively charged at the whole pH region. Thus, although it can not be used as such in a cationic aqueous resin, the composite sol can be easily converted into cationic one by adding a cationic polymer. In addition, in case where polyvinyl alcohol is used as aqueous resin, the composite sol of the first embodiment can be more easily cationized by adding a cationic polymer after mixing polyvinyl alcohol to the composite sol. It is easy to make the resulting mixture liquid alkaline by adding a base such as ammonia or the like.

The composite sol of the first embodiment according to the present invention is composed of large aggregated particles formed by coating and bonding colloidal silica particles with aluminum phosphate, and the aggregated particles have an excellent connecting property, so that an amount of aqueous resin to be used is reduced to give a good coating. In particular, composite sol having a large primary particle diameter can reduce the amount of aqueous resin to be used, and therefore ink absorptivity can be further improved.

The coating composition for ink receiving layer of the second embodiment according to the present invention is excellent in not only ink absorptivity, absorption speed but also sharpness of print, color, brilliance and the like, so that it is appropriate for top-coating layer of ink jet recording medium, so called a surface layer. In addition, as the coating composition in which composite sol having a primary particle diameter of 50 nm or more is used is particularly excellent in ink absorptivity, it can be also used for under-coating layer, so called under layer for which ink absorption is mainly required. In the meantime, for under-coating layer, the composite sol having a primary particle diameter of 50 nm or more may be used alone or in admixture with a general silica powder such as precipitated silica, gel method-silica powder.

In the coating composition for ink receiving layer of the second embodiment according to the present invention, the less primary particle diameter the composite sol used has, the more excellent recording characteristics in ink jet printer applicable for dye-based ink, such as sharpness of print or color it exhibits. On the other hand, the more primary particle diameter the composite sol used has, the more excellent recording characteristics in ink jet printer applicable for pigment-based ink, such as sharpness of print or color it exhibits.

Further, in the coating composition for ink receiving layer of the second embodiment according to the present invention, it is effective to use not only simple composite sol but also in admixture of composite sols having different primary particle diameter each other depending on intended use of ink jet recording medium and characteristics of paper or film to be used as substrate.

## Claims

1. A composite sol containing colloidal composite particles having a particle diameter measured by dynamic light scattering method of 20 to 500 nm, composed of colloidal silica particles having a specific surface area diameter of 3 to 100 nm and aluminum phosphate bonding the colloidal silica particles or coating and bonding the colloidal silica particles.

2. The composite sol according to claim 1, which has a weight ratio of silica to aluminum phosphate ranging from 99:1 to 10:90, and a total concentration of silica and aluminum phosphate ranging from 1 to 60% by weight.

3. A process for producing a composite sol containing colloidal composite particles having a particle diameter measured by dynamic light scattering method of 20 to 500 nm, composed of colloidal silica particles having a specific surface area diameter of 3 to 100 nm and aluminum phosphate bonding the colloidal silica particles or coating and bonding the colloidal silica particles in which the composite sol has a weight ratio of silica to aluminum phosphate ranging from 99:1 to 10:90, and a total concentration of silica and aluminum phosphate ranging from 1 to 60% by weight, comprises the following steps (a), (b) and (c):
step (a) of adding phosphoric acid or a phosphate to an aqueous silica sol having a silica concentration of 0.5 to 50% by weight, a pH of 1 to 11 and a specific surface area diameter of 3 to 100 nm, and mixing them;
step (b) of adding an aqueous solution of aluminum salt to the mixture liquid (a) obtained by step (a), and mixing them; and
step (c) of maturing the mixture liquid (b) obtained by step (b) at 20 to 100°C for 0.5 to 20 hours.

4. The process for producing a composite sol according to claim 3, wherein the aqueous solution of aluminum salt used in step (b) is an aqueous solution of sodium aluminate and/or an aqueous solution of basic aluminum salt.

5. A coating composition for ink receiving layer in ink jet recording comprising:
a composite sol containing colloidal composite particles having a particle diameter measured by dynamic light scattering method of 50 to 500 nm, composed of colloidal silica particles having a specific surface area diameter of 5 to 100 nm and aluminum phosphate bonding the colloidal silica particles or coating and bonding the colloidal silica particles, and having a weight ratio of silica to aluminum phosphate ranging from 99:1 to 10:90; and
an aqueous resin.

6. The coating composition for ink receiving layer in ink jet recording according to claim 5, wherein the composite sol is a composite sol containing colloidal composite particles having a particle diameter measured by dynamic light scattering method of 50 to 300 nm, composed of colloidal silica particles having a specific surface area diameter of 5 to 50 nm and aluminum phosphate bonding the colloidal silica particles or coating and bonding the colloidal silica particles, and having a weight ratio of silica to aluminum phosphate ranging from 99:1 to 10:90.

7. The coating composition for ink receiving layer in ink jet recording according to claim 5, wherein the composite sol is a composite sol containing colloidal composite particles having a particle diameter measured by dynamic light scattering method of 100 to 500 nm, composed of colloidal silica particles having a specific surface area diameter of 50 to 100 nm and aluminum phosphate bonding the colloidal silica particles or coating and bonding the colloidal silica particles, and having a weight ratio of silica to aluminum phosphate ranging from 99:1 to 10:90.

8. An ink jet recording medium having an ink receiving layer comprising:
a composite sol containing colloidal composite particles having a particle diameter measured by dynamic light scattering method of 50 to 500 nm, composed of colloidal silica particles having a specific surface area diameter of 5 to 100 nm and aluminum phosphate bonding the colloidal silica particles or coating and bonding the colloidal silica particles, and having a weight ratio of silica to aluminum phosphate ranging from 99:1 to 10:90; and
an aqueous resin.

9. The ink jet recording medium having an ink receiving layer according to claim 8, wherein the composite sol is a composite sol containing colloidal composite particles having a particle diameter measured by dynamic light scattering method of 50 to 300 nm, composed of colloidal silica particles having a specific surface area diameter of 5 to 50 nm and aluminum phosphate bonding the colloidal silica particles or coating and bonding the colloidal silica particles, and having a weight ratio of silica to aluminum phosphate ranging from 99:1 to 10:90.

10. The ink jet recording medium having an ink receiving layer according to claim 8, wherein the composite sol is a composite sol containing colloidal composite particles having a particle diameter measured by dynamic light scattering method of 100 to 500 nm, composed of colloidal silica particles having a specific surface area diameter of 50 to 100 nm and aluminum phosphate bonding the colloidal silica particles or coating and bonding the colloidal silica particles, and having a weight ratio of silica to aluminum phosphate ranging from 99:1 to 10:90.
